# EUROPEAN PATENT SPECIFICATION

(11) **EP 3 032 279 B1**
(45) Date of publication and mention of the grant of the patent: **20.03.2019**
(21) Application number: 14196812.3
(22) Date of filing: 08.12.2014
(51) Int. Cl.: G01S 19/42, G01S 19/24

(54) **Pseudorange determinator, method for providing a pseudorange information and computer program**
Pseudoentfernungsdeterminator, Verfahren zur Bereitstellung von Pseudoentfernungsinformation und Computerprogramm
Déterminateur de pseudo-distance, procédé permettant de fournir une information de pseudo-distance et programme informatique

(43) Date of publication of application: 15.06.2016
(73) Proprietor: Fraunhofer-Gesellschaft zur Förderung der angewandten Forschung e.V., 80686 München (DE)
(72) Inventor: Lukcin, Ivana, 90431 Nürnberg (DE); Rügamer, Alexander, 90480 Nürnberg (DE)
(74) Representative: Burger, Markus

(56) References cited:
- SHIVARAMAIAH NAGARAJ C ET AL: "Exploiting the Secondary Codes to Improve Signal Acquisition Performance in Galileo Receivers", GNSS 2008 - PROCEEDINGS OF THE 21ST INTERNATIONAL TECHNICAL MEETING OF THE SATELLITE DIVISION OF THE INSTITUTE OF NAVIGATION (ION GNSS 2008), THE INSTITUTE OF NAVIGATION, 8551 RIXLEW LANE SUITE 360 MANASSAS, VA 20109, USA, 19 September 2008 (2008-09-19), pages 1497-1506, XP056002756,
- GIOVANNI E CORAZZA ET AL: "Galileo Primary Code Acquisition Based on Multi-hypothesis Secondary Code Ambiguity Elimination", PROC. OF ION GNSS 2007, 25 September 2008 (2008-09-25), pages 2459-2456, XP055195180,
- PINI MARCO ET AL: "GPS L5 Signal Acquisition Exploiting Neumann-Hoffman Code Transitions", ITM 2010 - PROCEEDINGS OF THE 2010 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 27 January 2010 (2010-01-27), pages 765-772, XP056002166,

## Description

### 1. Technical Field

Embodiments according to the invention are related to a pseudorange determinator.

Further embodiments according to the invention are related to a method for providing a pseudorange information.

Further embodiments according to the invention are related to a computer program for performing said method.

Further embodiments according to the invention are related to a GNSS (Global Navigation Satellite System) snapshot positioning using secondary codes.

Nowadays, many applications use position information obtained by global navigation satellite systems (GNSS).

In many cases, it is desired to obtain a position information rapidly.

However, for some applications the calculation of the position using global navigation satellite systems (GNSS) is not needed instantaneously and can be outsourced to another device, e.g. a server, where the position is calculated "offline". Applications are e.g.
- Systems with strong constraints of the available energy when e.g. energy harvesting methods are the only available power source. Here it can be much more efficient for the end user device to just record a snapshot of raw GNSS data and either store or send this snapshot to a location determination server for processing. Depending on the application, the location information can then be sent back to the end-user device or only stored on the server itself.
- Standalone localization devices that cannot decode the navigation message in the conventional tracking position, velocity and time (PVT) determination mode e.g. due to short visibility of the sky and/or limited power on time of the device.
- In the case when classified GNSS signals are used, a server within a secure environment with an installed (classified) security module can be utilized to calculate the position of a data snapshot using classified signals (e.g. Galileo PRS) received by a device without any security module.

For the snapshot positioning method to work, two additional information next to the extracted pseudorange measurements from the raw snapshot are needed in some cases: ephemeris data (providing the position of the satellites when the snapshot was taken) and coarse reception time of the snapshot (better than 1min). The ephemeris data can e.g. be downloaded from assistant servers like the NASA or IGPS Web-page providing high precision ephemeris data. There, the ephemeris data are e.g. uploaded every two hours with the validity of 4 hours. The coarse time of snapshot reception can either be derived from an onboard clock on the end user device or - depending on the actual application - also derived as the time stamp of the snapshot samples received at the server side. If no coarse position is known, also an arbitrary position can be used as an initial value.

The first step in many GNSS receivers is to search and acquire the available satellites. Since the GNSS signals are often buried under the thermal noise floor with unknown code phase and Doppler properties, the acquisition process is a three-dimensional search problem. The input signal is, for example, correlated with a locally generated replica of the pseudo random noise (PRN) spreading code with a specific Doppler value. In case a satellite signal is present, the correlation results in a peak, whose position specifies the code delay. This process is, for example, repeated for all satellites and for a set of Doppler bins. It has been found that ambiguous pseudorange measurements (e.g. for GPS L1 C/A sub-millisecond pseudorange measurements) are typically obtained as the output of the acquisition process.

Using these ambiguous pseudorange measurements (also called fractional pseudoranges), a priori user position, satellite positions computed from ephemeris data at the coarse reception time of the snapshot, the reconstruction of the full pseudoranges (as describe in [10]) is done. At the end the position update is estimated from coarse-time navigation equations, where also updates of common bias and coarse-time are computed. Coarse-time navigation equations are similar to the navigation equations used in a standard receiver for PVT computation. The difference is an addition of the coarse-time caused by the relative satellite velocity. The main algorithm description is outlined in [10], but there are some additional references using the same, similar or extended method, like [3], [7], [8] and [9]. Slightly different methods and approaches are described in [4], [5] and [6].

In the following, some conventional approaches will be described.

In references [11] and [12], the use of pilot signal acquisition together with the snapshot procedure in the weak signal environment is described.

In reference [11] Galileo E5 signal is used with the advantage that its spreading code is 100 ms long. Based on this fact, the coherent correlations between the input signal and the local replica up to this length are performed. There is used a non-coherent integration scheme and also the code Doppler adjustment is done. The snapshot duration used when deriving the experimental results is 2 s. The goal was to reach low sensitivities for reasonable shot durations, but the same can be done with 100 ms or with any multiple of 100 ms of data.

In reference [12], Galileo E5ab acquisition technique for the weak signal environments is described. The technique is based on acquiring the E5a/b pilot signals. In the acquisition stage coherent correlations up to the length of the secondary code (100 ms) are carried out searching for transitions between adjacent secondary codes.

In both approaches (according to references [11] and [12]) the correlation is done with the spreading code of length 100ms or even longer, resulting in higher storage size, higher computational load, higher processing time and slower performance in comparison to the inventive approach described below.

In the pending patent [14] another way is described to solve integer ambiguity problem, used in case of three base stations and one mobile station to determine the position of the mobile station. In that case pilot channel signal information indicates arrival times of pilot channel signals at the mobile station.

In reference [13] an approach is described using primary code detection with multi-hypotheses secondary code.

Similar acquisition approach is described in reference [15]. Multi-hypotheses secondary code ambiguity elimination is done to decide which of possible 2ⁿ⁻¹ secondary codes is the best match (where n is the length of constructed secondary code).

US 6411892 describes a method and apparatus for locating mobile receivers using a wide area reference network for propagating ephemeris.

In this patent, one method is described that can be used to get the Galileo ephemeris data. The GPS ephemeris data are already available for download via the NASA link. That will also, with high probability, happen with the Galileo ephemeris. The described pseudorange model performs in less computations than when using complete ephemeris but there shouldn't be neglected the computational effort used to come to the data that the pseudorange model uses.

Also the placing of reference stations is described.

In such a positioning approach there are multiple possibilities for obtaining a priori user position information, like evaluating a position of the radio tower from which ephemeris data are received, or the approximate position of the mobile GPS receiver, like a last known point of said receiver, or some combination and variants of the already mentioned positions.

The method's purpose was to deliver as good as possible ephemeris data so that in the case of obstructed satellite reception the data collection delay is eliminated and the ephemeris data is transmitted directly to the mobile receiver.

In the case when the approximate user position is fairly accurate, the estimations of the pseudorange and pseudorange rate will also be pretty accurate.

Conditions for the algorithm are that the approximate position of the mobile device should be known within a few miles of a true position, the approximate time at the mobile device should be known within approximately one second of the true time and the correlator clock offset at the mobile device should be known within a few microseconds of the true offset.

Because the approximate a priori position of the mobile device is known to within 3 kilometers no a priori position accuracy problem occurs.

US 6417801 describes a method and apparatus for time-free processing of GPS signals.

As mentioned before, the problem of millisecond integer ambiguity occurs.

As an a-priori estimate of the GPS receiver position, the known location of a Wireless tower is used.

Requirements of the method are that an a-priori position is known within 100 km of the true position, and that the a-priori time of reception is known within one minute of the true (unknown) time of reception.

With the five a-priori estimates of the unknown parameters (3 coordinates of position, 1 absolute time and 1 common mode error) the server creates a mathematical model relating the measured pseudoranges and a-priori information to the unknown parameters. The mathematical model can be written as a linear equation, which, when solved, yields the correct position and time.

This mathematical model is presented through the coarse time navigation equations.

They solve the problem of a priori position by taking the new a priori position when radius is not sufficiently small. Using this approach in solving the problem may result in huge computational effort and in long execution time.

The patent describes a method of calculating a GPS position for a GPS receiver from partial pseudoranges that have ambiguity in a number of integer milliseconds, comprising: a) Choosing an a priori position of the GPS receiver; b) Calculating integers conforming to said a-priori position; c) Calculating a navigation solution; d) Calculating a-posteriori residuals; and e) Using a relative size of said a-posteriori residuals to determine if said calculated integers are correct; and f) Repeating steps c), d) and e) using another a-priori position until residuals having a magnitude below a predefined threshold are computed.

US 8,301,376 describes a method and apparatus for locating position of a GPS device.

The patent describes a method for provisioning a mobile device with a model for determining a position of the mobile device in at least one geographic area, the method comprising: forming, by a processor, at least one satellite orbit model and a wide area model formed from measurements from a plurality of satellites of a Global Positioning System, wherein said at least one satellite orbit model is formed based on measurements obtained by a plurality of reference stations, and wherein the wide area model comprises satellite clocks from said plurality of satellites of the Global Positioning System; and sending, by the processor, the at least one satellite orbit model to the mobile device.

US 6542820 describes a method and apparatus for generating and distributing satellite tracking information.

The patent describes one method for providing a satellite tracking data to achieve better position accuracy.

Such data conform to the broadcast ephemeris format models with the difference that it spans many hours.

The ephemeris created maintains its validity with approximately 1 m of error.

US 6651000 B2 describes a method and apparatus for generating and distributing satellite tracking information in a compact format.

US 7133772 B2 describes a method and apparatus for navigation using instantaneous Doppler measurements from satellites. The patent describes two methods for computing the user position. The first one is using the Doppler offset for each of satellite signals, and another one is using at least one pseudorange and at least one Doppler offset.

US 7133772 B2 describes a method of locating position of a satellite signal receiver, comprising: measuring at least one fractional pseudorange between the satellite signal receiver and a respective at least one satellite; measuring at least one instantaneous Doppler measurement for a respective at least one satellite signal relative to the satellite signal receiver; transmitting the at least one pseudorange and the at least one instantaneous Doppler measurement to a server; and computing a position of satellite signal receiver at the server using the at least one pseudorange and the at least one instantaneous Doppler measurement wherein computing comprises: computing an initial position of the satellite signal receiver using the at least one fractional pseudorange using the initial position to form at least one full pseudorange; forming pseudorange residuals using the at least one full pseudorange and the initial position; and computing an update of the initial position.

US 8581779 describes a method and apparatus for validating a position in a satellite positioning system using range-rate measurements.

A position of the remote receiver is computed using the fractional pseudoranges and the initial position. Range-rate measurements are obtained at the remote receiver with respect to the satellites. The computed position is validated using the range-rate measurements.

Notably, if the initial position is deemed valid, the initial position may be used to fix the integer portions of the fractional pseudoranges.

US 7,158,883 B2 describes a method and apparatus for locating position of a GPS device.

The patent describes a method of locating a position of a Global Positioning System (GPS) device, comprising: generating a position request at a web portal; receiving, in response to the position request, an approximate position of the GPS device at the web portal from a wireless carrier; transmitting an initialization packet request for the approximate position to a server; receiving an initialization packet at the web portal from the server, the initialization packet including a satellite orbit model configured for the approximate position; forwarding the initialization packet to the GPS device via the wireless carrier; determining pseudo-noise code phase information at the GPS device using the satellite orbit model in the initialization packet; receiving the pseudo-noise code phase information at the web portal from the GPS device via the wireless carrier; forwarding the pseudo-noise code phase information to the server; computing the position of the GPS device at the server using the pseudo-noise code phase information; and receiving position at the web portal from the server.

US 6,958,726 B1 describe a method and apparatus for adjusting acquisition assistance data received by a mobile receiver from a server.

The patent describes a method of adjusting acquisition assistance data received by a mobile receiver from a server, comprising: measuring pseudoranges from a said mobile receiver to a set of satellites; obtaining line-of-sight data with respect to said mobile receiver and said set of satellites; processing said pseudoranges and said line-of sight data to compute updates for an initial position associated with said acquisition assistance data and correlator clock bias associated with said pseudoranges and adjusting said acquisition data using said updates and said line-of-sight data.

US 7,158,882 B2 describes a method and apparatus for locating position of a mobile receiver.

The patent describes a method of locating position of a mobile receiver, comprising: determining sets of satellite measurements with respect to a plurality of satellites over a period of time; detecting whether said mobile receiver is in a stationary condition over said period of time; and computing a position of said mobile receiver using said sets of satellite measurements in response to detection of said stationary condition.

US 7,400,974 B2 describes a method and apparatus for locating position of a GPS device.

The patent describes a method for provisioning a mobile device with a model for determining a position of the mobile device in at least one geographic area, the method comprising: obtaining an estimate of a position of the mobile device; forming at least one satellite orbit model from the estimate and a wide area model formed from measurements from a plurality of satellites of a Global Positioning System, wherein the measurements are obtained by a plurality of reference stations; and sending the at least one satellite orbit model to the mobile device.

US 6,487,499 B1 describes a method for adjusting a pseudorange model.

The patent describes a method for adjusting a pseudorange model, comprising: providing the pseudorange model to a Global Positioning System (GPS) mobile device; receiving a wireless signal at the GPS mobile device; determining the frequency offset between the GPS mobile device and the wireless signal; determining a time offset between the GPS mobile device and the wireless signal using the time offset and the frequency offset to solve for clock error of the GPS mobile device; and using the clock error to adjust the pseudorange model.

US 7,940,214 B2 describes a method and apparatus for determining absolute time-of-day in a mobile assisted satellite positioning system.

The patent describes a method of determining time-of-day in a mobile receiver, comprising: obtaining expected pseudoranges to a plurality of satellites, said expected pseudoranges based on initial position of said mobile receiver and an initial time-of-day at said mobile receiver; obtaining expected line-of-sight data to said plurality of satellites at said mobile receiver; measuring pseudoranges from said mobile receiver to said plurality of satellites at said mobile receiver, and computing update data for said initial time-of-day using a mathematical model relating said pseudoranges, said expected pseudoranges, and said expected line-of-sight data at said mobile receiver.

US 7944394 B2 describes a method and apparatus for validating a position in a satellite positioning system using range-rate measurements.

The patent describes a method of locating position of a remote receiver, comprising: measuring fractional pseudoranges from said remote receiver to a plurality of satellites; obtaining an initial position at said remote receiver; computing position of said remote receiver using the fractional pseudoranges and said initial position; obtaining range-rate measurements at said remote receiver with respect to said plurality of satellites, wherein obtaining range-rate measurements further comprises: measuring additional fractional pseudoranges from said remote receiver to a plurality of satellites at another time; and differencing said fractional pseudoranges and said additional fractional pseudoranges to produce said range-rate measurements; and validating said position using said range-rate measurements.

The article "Exploiting the Secondary Codes to Improve Signal Acquisition Performance in Galileo Receivers" of N. C. Shivaramaiah et al. describes that in GNSS, longer integrations are required to obtain better signal-to-noise ratio during the signal synchronization process. According to the article, the presence of secondary codes on the top of primary codes puts a constraint on the coherent integration duration for pilot channels in a similar way to the effect of data bits in the data carrying channels. The article discusses the problem of coherent integration over periods longer than one primary code length and the acquisition of secondary code chip position. An acquisition engine architecture which can handle both of these problems together is disclosed.

In the following, the problems arising from the prior art will be briefly discussed.

A main problem in the basic approach described in [10] appears after computing fractional pseudoranges for each satellite in view, together with the predicted pseudoranges. This is the integer ambiguity problem (of milliseconds for GPS L1 C/A) due to the fact that the whole number of code-cycles between user and the satellite is not known. There are methods to solve this problem using the modulus operation. One thing that is common to these methods is that any common bias that adds to an expected pseudorange to give a pseudorange error value close to the epoch length (e.g. 1 ms for GPS L1 C/A, 4 ms for Galileo E1B/C) rollover can cause epoch length rollover errors (e.g. 1 ms for GPS L1 C/A) ([10]). Van Diggelen uses a method described in [10] that uses a reference satellite and some additional formulas to assign integer values to all satellites in view. When the full pseudoranges are correctly reconstructed, then the estimated user position will be accurate.

It has been found that a problem in the van Diggelen technique is that it uses predicted pseudoranges to get the full ones. This is one of the reasons for the requirements on the a priori user position and time to be better than 100 km and 1 min, respectively. Under these conditions, this technique will give the correct integers and the correct solution. The a posteriori residuals will be large when the integers are wrong and small when they are valid. Based on the result the new position may be computed using another initial position and time. This should be repeated until a posteriori residuals are small enough.

In view of the above, there is a need for an improved concept to provide a pseudorange information, which can be used to estimate a distance between a transmitter and a receiver.

### 2. Summary of the Invention

The present invention discloses apparatus and methods for providing a pseudorange information as defined in the appended claims.

The invention is based on the idea that an evaluation of a comparatively long secondary code sequence, which modulates a primary code sequence, allows for a reduction, or even an elimination, of ambiguities when determining the distance between a transmitter and a receiver. In addition, it has been found that the secondary code sequence can be evaluated in a computationally efficient manner by step-wisely correlating a portion (or portions) of the received signal comprising at least two symbols with at least two reference sequences, a first reference sequence representing at least two subsequent symbols having same phases and a second reference sequence representing at least two subsequent symbols having different phases. By using such a concept, a very long correlation, which typically consumes a large amount of memory, can be avoided. Rather, it is possible to step-wisely increase the knowledge about the received sequence of symbols of the secondary code sequence, for example, until it is possible to uniquely identify which portion within a (typically repetitive and comparatively long) secondary code sequence has been received, which in turn allows to provide an unambiguous estimate of the distance between the transmitter and the receiver.

Thus, the concept mentioned above allows to efficiently determine unambiguous pseudoranges while keeping a computational effort reasonably small.

In an embodiment, the pseudorange determinator is configured to determine, in a first step, which reference sequence out of at least two reference sequences is most similar to a first portion of the received signal comprising at least two symbols. Moreover, the pseudorange determinator is configured to determine, in a second step, which reference sequence, out of at least two reference sequences of a second set of reference sequences (which may be equal to or different from the first set of reference sequences), is most similar to a second portion of the received signal comprising at least two symbols, wherein the second portion of the received signal overlaps with the first portion of the received signal. By using overlapping portions of the received signal in subsequent steps, it is possible to efficiently decode information (e.g. modulation symbols) which is represented by a change of a phase. Thus, it is efficiently possible to increase the knowledge of which symbols of the secondary code sequence have been received, until a sufficient (i.e. meaningful) portion of the secondary code sequence has been evaluated in order to provide a, preferably unambiguous, information about a pseudorange.

In a preferred embodiment, the pseudorange determinator is configured to choose the second set of reference sequences in dependence on a result of the determination made in the first step. This embodiment is based on the consideration that the reference sequences of the second set of reference sequences should begin with one or more symbols (e.g. modulation symbols) recognized at the end of the previously evaluated portion of the received signal. Thus, the second set of reference sequences can be adapted to the previously recognized (or decoded) symbols, which improves computational efficiency since it can be avoided to include reference sequences into the second set of reference sequences which do not fit the previously recognized (or decoded) symbols (for example, of the secondary code sequence).

In a preferred embodiment, the pseudorange determinator is configured to determine, in one or more additional steps, which reference sequence, out of at least two reference sequences of one or more additional sets of reference sequences, is most similar to a respective portion of the received signal comprising at least two symbols, wherein a respective currently processed portion of the received signal overlaps with a respective previously processed portion of the received signal. Accordingly, the symbols of the secondary code sequence can be recognized (within the received modulated signal) step-by-step, wherein correlations (or, generally, signal comparisons) performed in every step do not comprise an excessive length (which helps to keep the computational effort reasonably small).

In a preferred embodiment, the pseudorange determinator is configured to step-wisely increase a knowledge about the secondary code sequence (which is included in the processed portion of the received modulated signal), wherein the pseudorange determinator is configured to use previously acquired knowledge about the secondary code sequence (or, more precisely, about the portion of the secondary code sequence included in the previously processed portion of the received modulated signal) to increase the knowledge about the secondary code sequence. In other words, the previously acquired knowledge about the secondary code sequence can be used to limit the search for additional symbols of the secondary code sequence to such symbols (or symbol combinations) which are in agreement with the previously acquired knowledge about the secondary code sequence. Thus, invalid combinations (or sub-sequences) of symbols can be avoided (for example, when performing correlations or signal comparisons), which helps to improve the efficiency.

In a preferred embodiment, the pseudorange determinator is configured to use a search tree (or, preferably, a binary search tree) in order to step-wisely acquire the portion of the secondary code sequence. By using a search tree, it is possible to restrict a search in a subsequent step in dependence on one or more previously recognized (or decoded) symbols. The search tree or binary search tree may define dependencies between subsequent symbols (for example, of the secondary code sequence). Thus, if it is found that the previously recognized (or decoded) symbols belong to a certain node of the search tree (or binary search tree), it can be concluded that one or more subsequent symbols (for example of the secondary code sequence) will be defined by one of the child nodes of the current node. Accordingly, the search tree or binary search tree can help to efficiently identify a portion of the secondary code sequence, wherein the search tree or binary search tree may reflect dependencies between subsequent symbols of the secondary code sequence.

In a preferred embodiment, the pseudorange determinator is configured to select a branch of the search tree or of the binary search tree in response to a result of a correlation of a portion of a received signal comprising at least two symbols with at least two reference sequences. Accordingly, there is a computationally efficient mechanism to decide which branch of the search tree to follow.

In a preferred embodiment, the pseudorange determinator is configured to step-wisely increase a knowledge about the secondary code sequence (or, more precisely, about received symbols of the secondary code sequence) until it is found that a knowledge about the secondary code sequence (or, more precisely, about the received symbols of the secondary code sequence) is sufficient to uniquely determine a position of the acquired (for example, recognized or decoded) portion the secondary code sequence within a full period of a repetitive secondary code sequence. Accordingly, it is possible to provide the pseudorange information as soon as possible. For example, the pseudorange determinator may be adapted to recognize when the recognized (or decoded) symbols are sufficient to define a unique sequence within the secondary code sequence. For example, some sequences of symbols may be particularly significant, such that recognition (or decoding) of only a small number of symbols may be sufficient to uniquely associate the recognized (or decoded) sequence of symbols to a position within the secondary code sequence. In contrast, for some other sequences of recognized (or decoded) symbols, a larger number of subsequent recognized (or decoded) symbols may be required to uniquely associate the sequence of recognized (or decoded) symbols to a position within the secondary code sequence. Thus, by step-wisely increasing the knowledge about the secondary code sequence or, more precisely, about a sequence of recognized (or decoded) symbols corresponding to the secondary code sequence, until it is found that the knowledge (about the secondary code sequence) is sufficient to uniquely determine a position of the acquired portion of the secondary code sequence within a full period of a repetitive secondary code sequence, the pseudorange information can be obtained as quickly as possible in the situation, and can be determined particularly fast if a particularly short sequence of recognized (or decoded) symbols is sufficient to uniquely determine a position of the acquired portion of the secondary code sequence within a full period of a repetitive secondary code sequence.

In a preferred embodiment, the pseudorange determinator may be configured to decide, on the basis of an evaluation of a search tree or a binary search tree, how many symbols should be evaluated in order to obtain a sufficient knowledge about the secondary code sequence (which is modulated onto the received signal), sufficient to uniquely determine a position of the acquired portion of the secondary code sequence within a full period of a repetitive secondary code sequence.

In a preferred embodiment, the modulated signal is a pilot signal of a satellite-based global navigation system. The primary code sequence is a spreading code of the satellite-based global navigation system. The secondary code sequence is an overlay code of the satellite-based global navigation system. Accordingly, the pseudorange determinator can help to uniquely determine a position in a computationally efficient manner, using a satellite-based global navigation system.

In a preferred embodiment, a period length of the (repetitive) secondary code sequence (which is modulated onto the received signal) is longer than a temporal variation of a propagation time between the transmitter and the receiver in a navigation system. By using such a long secondary code sequence, ambiguities can be avoided and a pseudorange can be determined efficiently.

In a preferred embodiment, the second reference sequence represents at least two subsequent symbols having opposite phases. By using reference sequences, one of which represents at least two subsequent symbols having same phases, and one of which represents subsequent symbols having opposite phases, an information, which is represented by phase changes, can easily be evaluated. Thus, it is possible to efficiently recognize (or decode) symbols of the secondary code sequence.

In a preferred embodiment, the pseudorange determinator is configured to use an a-priori knowledge of the primary and secondary code sequence in order to provide the pseudo range information. Accordingly, the determination of the pseudorange can be performed efficiently.

Another embodiment according to the invention creates a method for providing a pseudorange information representing an estimate of a distance between a transmitter and a receiver on the basis of a modulated signal comprising a sequence of symbols, wherein a primary code sequence is modulated in accordance with a secondary code sequence. The method comprises step-wisely correlating a portion (or a plurality of portions) of a received signal comprising at least two symbols with at least two reference sequences, a first reference sequence representing at least two subsequent symbols having same phases and a second reference sequence representing at least two subsequent symbols having different phases, to step-wisely acquire, in dependence on a result of the correlations, a portion of the secondary code sequence. The method also comprises providing the pseudorange information on the basis of an acquisition of a meaningful portion of the secondary code sequence. This method is based on the same considerations as the above mentioned pseudorange determinator.

Another embodiment according to the invention creates a computer program for performing said method when the computer program runs on a computer.

### 3. Brief Description of the Figures

Embodiments according to the present invention will subsequently be described taking reference to the enclosed figures, in which:
- Fig. 1: shows a block schematic diagram of a pseudorange determinator, according to an embodiment of the present invention;
- Fig. 2: shows a block schematic diagram of a method for providing a pseudorange information, according to an embodiment of the present invention;
- Fig. 3: shows a schematic representation of a tiered code creation;
- Fig. 4: shows a graphic representation of a binary search tree, which is used in some embodiments according to the present invention;
- Fig. 5: shows a graphic representation of a general search tree, which is used in some embodiments according to the present invention;
- Fig. 6: shows a flowchart of a method for determining a user position, according to an embodiment of the present invention;
- Fig. 7: shows a graphic representation of a first step of a secondary code acquisition procedure for E1C;
- Fig. 8: shows a graphic representations of steps of a secondary code acquisition procedure for E1C;
- Fig. 9: shows a graphic representation of a first step of a secondary code acquisition procedure for L5Q;
- Fig. 10: shows a graphic representation of steps of a secondary code acquisition procedure for L5Q;
- Fig. 11: shows a graphic representation of a first step of a secondary code acquisition procedure for E5aQ;
- Fig. 12: shows a graphic representation of steps of a secondary code acquisition procedure for E5aQ;
- Fig. 13: shows a graphic representation of errors occurring in snapshot positioning while using secondary code acquisition on the basis of E5aQ signals;
- Fig. 14: shows a graphic representation of errors occurring when performing snapshot positioning while using secondary code acquisition on the basis of E1C signals;
- Fig. 15: shows a graphic representation of errors occurring when performing snapshot positioning while using secondary code acquisition on the basis of L5Q signals; and
- Fig. 16: shows a table representing errors in a computed position when using the proposed algorithm applied on different signals.

### 4. Detailed Description of the Embodiments

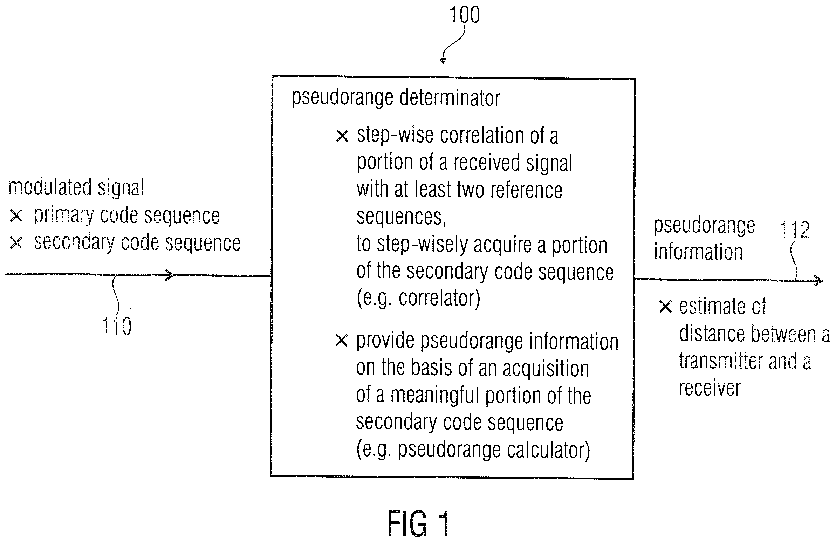

### 4.1 Pseudorange Determinator According to Fig. 1

Fig. 1 shows a block schematic diagram of a pseudorange determinator, according to an embodiment of the invention. The pseudorange determinator 100 receives a modulated signal 110 comprising a sequence of symbols, wherein a primary code sequence is modulated in accordance with a secondary code sequence. Moreover, the pseudorange determinator 100 provides a pseudorange information 112, wherein the pseudorange information 112 may represent (or comprise) an estimate of a distance between a transmitter and a receiver. The pseudorange information 112 may comprise some inaccuracies (which may, for example, arise from inaccuracies of a clock which is used to operate the pseudorange determinator), and is therefore called a "pseudorange" information.

The pseudorange determinator 100 is configured to step-wisely correlate a portion (or, equivalently, a plurality of portions) of the received signal 110 comprising at least two symbols (for example, at least two symbols of the secondary code sequence) with at least two reference sequences, a first reference sequence representing at least two subsequent symbols having same phases and a second reference sequence representing at least two subsequent symbols having different phases, to step-wisely acquire, in dependence on a result of the correlations, a portion of the secondary code sequence. This functionality may be performed, for example, using a correlator, which may be a part of the pseudorange determinator. Moreover, the pseudorange determinator 100 may be configured to provide the pseudorange information 112 on the basis of an acquisition of a meaningful portion of the secondary code sequence. Worded differently, the pseudorange determinator is configured to correlate different portions of the received signal with at least two respective reference sequences, to recognize which symbols of a secondary code sequence are modulated onto the respective portions of the received signal. Accordingly, one or more modulation symbols are recognized (or detected) with each correlation step. Accordingly, more and more symbols (modulation symbols) of the secondary code sequence are recognized (or detected) within the received modulated signal, wherein the secondary code sequence in its entirety is typically known to the pseudorange determinator, and wherein the recognition (or detection) of symbols of the secondary code sequence within the received modulated signal may serve the purpose to determine a time which has passed between a transmission of the modulated signal by a transmitter and a reception of the modulated signal by a receiver, to thereby obtain an estimate of a distance between the transmitter and the receiver. Accordingly, the pseudorange determinator can provide the pseudorange information on the basis of an acquisition of a "meaningful" portion of the secondary code sequence, i.e. when a sufficient number of symbols of the secondary code sequence modulated onto the received signal has been recognized (or decoded) which allows for a (preferably unique) determination of which portion of the secondary code sequence (which is typically known to the pseudorange determinator) has been received.

To conclude, the pseudorange determinator 100 step-wisely correlates a portion (or a plurality of portions) of a received signal (the portion or the portions comprising at least two symbols) with at least two reference sequences, a first reference sequence representing at least two subsequent symbols having same phases and a second reference sequence representing at least two subsequent symbols having different phases, to step-wisely acquire (or recognize, or detect), in dependence on a result of the correlations, a portion of the secondary code sequence (or multiple portions of the secondary code sequence). Accordingly, the pseudorange determinator can provide the pseudorange information on the basis of an acquisition of a meaningful (e.g. sufficient) portion of the secondary code sequence.

However, it should be noted that the pseudorange determinator 100 may be supplemented by any of the features and functionalities described in the following.

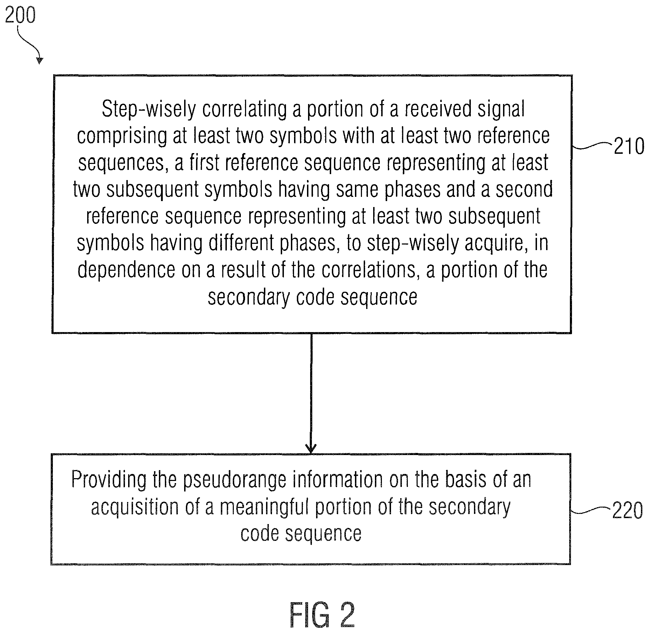

### 4.2 Method According to Fig. 2

Fig. 2 shows a flowchart of a method for providing a pseudorange information representing an estimated distance between the transmitter and the receiver on the basis of a modulated signal comprising a sequence of symbols, wherein a primary code sequence is modulated in accordance with a secondary code sequence.

The method 200 comprises step-wisely correlating 210 a portion (or, equivalently, multiple portions) of a received signal (the portion or the portions comprising at least two symbols) with at least two reference sequences, a first reference sequence representing at least two subsequent symbols having same phases and a second reference sequence representing at least two subsequent symbols having different phases, to step-wisely acquire (or recognize, or detect), in dependence on a result of the correlations, a portion (or, equivalently, multiple overlapping or non-overlapping portions) of the secondary code sequence. The method also comprises providing 220 the pseudorange information on the basis of an acquisition of a meaningful (sufficient) portion of the secondary code sequence.

It should be noted that the method 200 according to Fig. 2 is based on the same considerations as the pseudorange determinator 100 according to Fig. 1, such that reference is made to the above explanations. However, it should be noted that the method 200 can be supplemented by any of the features and functionalities described herein, also with respect to the pseudorange determinator.

### 4.3 First Example

### 4.3.1 Modulated Signal

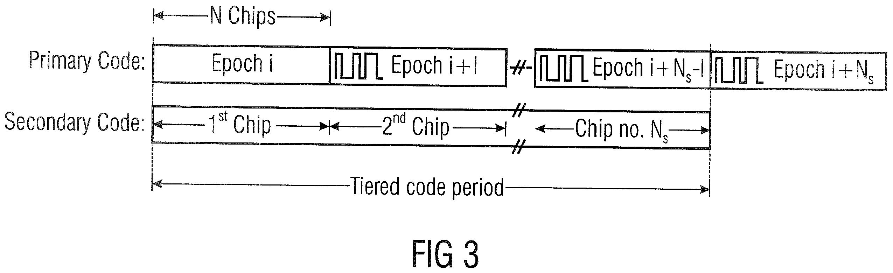

Fig. 3 shows a schematic representation of a tiered code creation. Regarding the tiered code creation, reference is made, for example, to document [2].

As can be seen, a modulated signal may comprise an overlay of a primary code and a secondary code. The primary code may comprise a plurality of so-called "epochs", wherein the epochs are designated with time-indices I, I + 1, ..., I + N_{S} - 1, I + N_{S}, and so on. Each epoch may comprise N "chips" of the primary code. In other words, each epoch may comprise N "smallest modulation symbols", each of which may be represented by a certain phase (e.g., of a modulated signal) or a certain phase change (e.g. of a modulated signal). However, it should be noted that the epochs of the primary code are typically identical. Accordingly, the primary code is repetitive, wherein the periodicity may be equal to the temporal duration of a single epoch (i.e. to the duration of N chips of the primary code). However, a secondary code may be overlaid over the primary code (such that the primary code sequence is "modulated" in accordance with the secondary code sequence).

The secondary code may comprise a sequence of secondary code symbols (which are also designated as chips of the secondary chip, and labeled with "first chip" to "chip number N_{S}"). For example, the secondary code may comprise a periodicity length of N_{S} epochs of the primary code. Moreover, each chip (for example, each bit value) of the secondary code may be associated with a corresponding epoch.

For example, the N chips of the epoch i of the primary code may be modulated in accordance with the first chip of the secondary code. For example, the N chips of the epoch i of the primary code may be multiplied by a bit value (for example, plus 1 or minus 1) of the first chip of the secondary code. Similarly, the epoch i + 1 (more precisely, the N chips of the epoch i+1) may be modulated in accordance with the second chip of the secondary code. Also, the epoch i + N_{S} - 1 of the primary code may be modulated in accordance with the chip number N_{S} of the secondary code. Accordingly, a period duration of the modulated signal may be equal to the period duration of the secondary code.

Moreover, it should be noted that the epoch i + N_{S} of the primary code may be modulated, again, with the first chip of the secondary code.

Accordingly, the modulated signal, in which the primary code (or primary code sequence) is modulated in accordance with the secondary code (or secondary code sequence) comprises a "tiered code period", which is equal to the period length of the secondary code. Also, it should be noted that the modulated signal may, for example, comprise multiple copies of the primary code, wherein the multiple copies of the primary code may, for example, be phase shifted (or selectively inverted) in accordance with the secondary code.

Moreover, it should be noted that the modulated signal, which is typically transmitted by a transmitter, is typically known at the side of a receiver (or the side of a pseudorange determinator). Also, the receiver, or pseudorange determinator, may have a-priori knowledge (or at least approximate a-priori knowledge) at which time the transmitter starts to transmit a given portion of the modulated signal. For example, the receiver may have a-priori knowledge at which absolute time the transmitter starts to transmit the first chip of the secondary code. However, since the receiver typically does not initially know its distance from the transmitter, the receiver typically tries to find out at which time a given chip of the secondary code was received, or equivalently, which chip of the secondary code has been received at a given time, in order to make a conclusion about the distance between the transmitter and the receiver. However, since the receiver's knowledge about the absolute time may be inaccurate, the receiver may only be able to obtain an estimate of the distance between the transmitter and the receiver in an initial processing step, such that the distance information may be considered a "pseudorange information".

Moreover, it should be noted that in some cases, maximum variation of the distance between the transmitter and the receiver may be limited due to the design of navigation system. In such a case, a period length of the secondary code may be chosen to be longer than a temporal variation of a propagation time between the transmitter and the receiver.

To conclude, the tiered code described taking reference to Fig. 3 may be transmitted by a transmitter, for example by a transmitter of a navigation system, and maybe evaluated by the pseudorange determinator.

### 4.3.2 Functionality of the Pseudorange Determinator

In the following, it will be described how a pseudorange determinator can analyze a received modulated signal, which may be a modulated signal in accordance with Fig. 3 (and which may comprise a sequence of symbols, wherein a primary code sequence is modulated in accordance with a secondary code sequence).

For example, the pseudorange determinator may assume that the first chip of the secondary code takes a logical value of "0", which is indicated at reference numeral 410 (root node of the tree).

For example, such an assumption may be justified if the pseudorange determinator cannot determine an absolute phase of the modulated signal, and can only evaluate phase changes.

In a first step, the pseudorange determinator may correlate a portion of the received signal comprising two symbols of the secondary code, with a first reference sequence "00", which is shown at reference numeral 420, and with a second reference sequence "01", which is shown at reference numeral 422. For example, the first reference sequence "00" may represent two symbols of the secondary code sequence having same phases (and same logical values "00"). The second reference sequence "01" may represent two subsequent symbols of the secondary code sequence having different phases, for example, two symbols of the second reference sequence having opposite phases (and representing opposite binary values "0" and "1").

For example, the pseudorange determinator may correlate a portion of the received symbol, which comprises a duration of two epochs, with the two reference sequences "00" (reference numeral 420) and "01" (reference symbol 422).

Accordingly, the pseudorange determinator may determine whether the first portion of the related signal is modulated in accordance with the modulation symbols "00" or in accordance with the modulation symbols "01".

If the pseudorange determinator finds out that the first portion of the modulated symbol is modulated in accordance with the modulation symbols "00" in the first step, the pseudorange determinator may, in a second step, correlate a second portion of the modulated signal (wherein the second portion of the modulated signal may overlap with the first portion of the modulated signal, and wherein the second portion of the modulated signal may, for example, comprise the second epoch and a third epoch) with the reference sequence "00" (shown at reference numeral 430) and with the reference sequence "01" (shown at reference symbol 432). In contrast, if it found in the first step of the iterative procedure that the first portion of the modulated signal comprises modulation symbols "01" (of the secondary code), the pseudorange determinator may correlate the second portion of the modulated signal with a third reference sequence "10" (shown at reference symbol 434) and with a fourth reference sequence "11" (shown at reference symbol 436).

It should be noted that the pseudorange determinator will typically correlate the second portion of the modulated signal with reference sequences 430, 432 which start with a modulation symbol "0" if it is found, in the first step, that the first portion of the modulated signal ends with a modulation symbol "0". Similarly, the pseudorange determinator will (selectively) correlate the second portion of the modulated signal with reference sequences 434, 436 which start with a modulation symbol "1" if the pseudorange determinator finds, in the first step, that the first portion of the modulated signal ends with a modulation symbol "1".

In a third step, the pseudorange determinator evaluates a third portion of the modulated signal, wherein the third portion of the modulated signal comprises the third epoch and a fourth epoch. Again, the pseudorange determinator selects the reference sequences in dependence on a last symbol (end symbol) which has been identified for the previous (second) portion of the modulated signal. For example, if it is found, in the second step, that the last symbol (end symbol) of the second portion of the modulated signal is "0" (i.e. if the reference sequence 430 or the reference sequence 434 is detected to result in a largest correlation value in the second step), the pseudorange determinator uses reference sequences "00" (440, 444) and "01" (441, 445) in the third step. Similarly, if it is detected, in the second step, that the last symbol or end symbol of the second portion of the modulated signal is "1" (i.e. if the reference sequence 432 or the reference sequence 436 results in a largest correlation result), the pseudorange determinator selects, and uses (i.e. selectively uses) reference sequences "10" (442, 446) and "11" (443, 447), which have a starting symbol of "1".

Moreover, the pseudorange determinator selects references sequences for performing a correlation in a fourth step, in which a fourth portion of the modulated signal (comprising the fourth epoch and a fifth epoch) is evaluated, in dependence on a result of the correlations performed in the third step.

Accordingly, it is assumed that four steps of the correlation are performed, each step covering two symbols of the secondary code of the modulated signal, with an overlap between the first and the second step, between the second and third step, and between the third and the fourth step, and that, as a result, a total of five symbols of the secondary code included in the modulated signal are known. However, there may be a phase ambiguity in some cases, such that, for example, it may not be possible to distinguish between the secondary code sequence "00000" and the secondary code sequence "11111 ". This may be due to the assumption made in the very beginning, that the first epoch comprises a secondary code symbol of "0". However, in other cases, such an ambiguity may not be present.

To conclude, the pseudorange determinator may be configured to determine, in the first step, which reference sequence out of the at least two reference sequences 420, 422 is most similar to a first portion of the received signal comprising at least two symbols (for example, first epoch and a second epoch). Moreover, the pseudorange determinator is configured to determine, in the second step, which reference sequence, out of at least two reference sequences 430, 432; 434, 436) of a second set of reference sequences is most similar to the second portion (comprising, for example, the second epoch and the third epoch) of the received signal comprising at least two symbols (for example, two symbols of the secondary code sequence). As can be seen, the second portion of the received signal overlaps with the first portion of the received signal (wherein the overlap is equal to the second epoch). Moreover, it should be noted that the determination, which reference sequence out of the at least two reference sequences is most similar to the respective portion of the received signal may be made using a correlation between the respective portion of the modulated signal and the reference sequence (wherein the reference sequence may, for example, take the form of a comparison signal, in which the primary code is modulated with the secondary code defined by the logical symbol values of the "reference sequence").

As can be seen, the pseudorange determinator is configured to choose the second set of reference sequences in dependence on a result of the determination made in the first step. For example, the pseudorange determinator chooses the reference sequences 430, 432 for usage in the second step if the reference sequence 420 results in the largest correlation value (for example, compared to the reference sequence 422) in the first step. In contrast, the pseudorange determinator selects the reference sequences 434, 436 for usage in the second step if the reference sequence 422 results in the largest correlation value (for example, compared to the reference sequence 420) in the first step.

As can also be seen, the pseudorange determinator is configured to determine, in one or more additional steps (for example, in the third step and the fourth step described above) which reference sequence, out of at least two reference sequences of one or more additional sets of reference sequences, is most similar to the respective portion of the received signal comprising at least two symbols. The respective currently processed portion of the received signal (for example, the third portion of the received modulated signal or the fourth portion of the received modulated signal) overlaps with a respective previously processed portion of the received modulated signal (for example, with the second portion of the modulated signal or the third portion of the modulated signal, respectively).

Worded differently, the pseudorange determinator is configured to step-wisely increase knowledge about the secondary code sequence (for example, about the secondary code sequence modulated onto the received modulated signal under consideration). The pseudorange determinator is preferably configured to use previously acquired knowledge about the secondary code sequence to increase knowledge about the secondary code sequence. For example, in the first step, knowledge about the first epoch and the second epoch is acquired. However, in the second step, knowledge about the third epoch is also acquired such that, after completion of the third step, knowledge about the portion of the modulated signal extending from the first epoch to the third epoch is available. In the third step, this knowledge is extended by acquiring knowledge also about the fourth epoch.

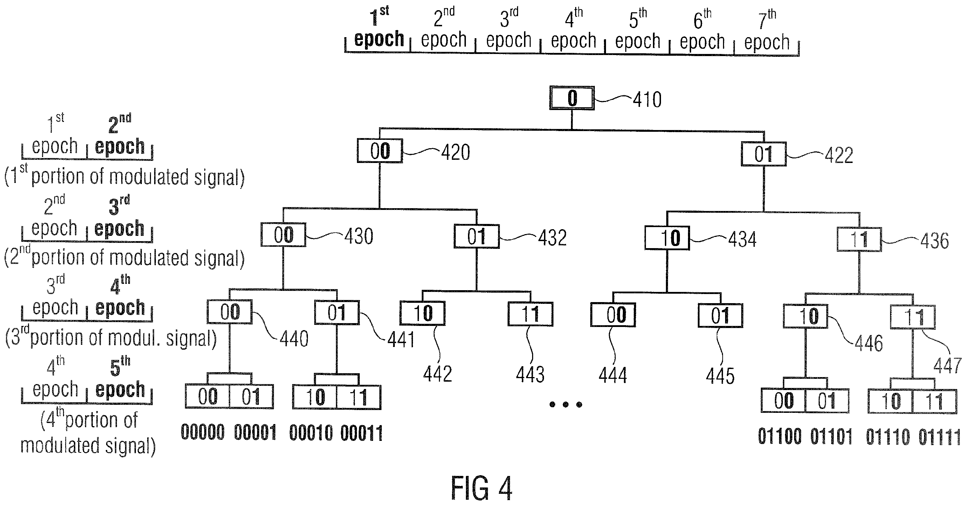

Moreover, from Fig. 4 it is apparent that the pseudorange determinator is configured to use a search tree (for example, a binary search tree) in order to step-wisely acquire (i.e. obtain information about or decode or detect) the portion of the secondary code sequence. In each step, the decision is made, which of the (for example two) reference sequences considered in that step best approximates the currently considered portion of the modulated signal. If a decision has been made in a step i, a branch of the search tree is selected, such that only reference sequences in the selected branch of the search tree are considered in step i + 1. For example, in the first step, it is decided whether the branch which is subordinated to reference sequence 420 or the branch which is subordinated to reference sequence 422 is followed in the second step. Accordingly, in the second step, either reference sequences 430 and 432 or reference sequences 434 and 436 are considered, depending on the decision made in the first step. Also, in the second step, it is decided whether the branch subordinated to reference symbol 430 or the branch subordinated to reference symbol 432 will be followed in the third step (if the branch subordinated to reference symbol 420 is selected in the first step). Thus, it is not necessary to consider all possible reference sequences in the subsequent step.

Worded differently, the pseudorange determinator is configured to select a branch of the search tree (which may, for example, be a binary search tree) in response to a result of a correlation of a portion of the received signal comprising at least two symbols with at least two reference sequences. For example, in each step of the iterative evaluation, a branch may be selected. Accordingly, it is not necessary to try out each possible combination of symbols of the secondary code sequence. Also, the correlation length in each step is kept reasonably small, while "coherence" with the end of the previously considered portion of the modulated signal is still maintained by having an overlap between the subsequently considered portions of the modulation signal (for example, between the first portion of the modulated signal and the second portion of the modulated signal, and also between the second portion of the modulated signal and the third portion of the modulated signal, and so on).

Moreover, it should be noted that number of steps, which is performed to consider different overlapping portions of the modulated signal, may be fixed. However, in other cases, the number of steps may depend on the consideration whether the acquired information about the secondary code sequence is sufficient ("meaningful") to determine which portion within the a-priori-known transmitted secondary code sequence has been received. For example, some sequences of modulation symbols of the secondary code sequence may be particularly characteristic, such that only a comparatively smaller number of recognized modulation symbols of the secondary code sequence may be sufficient to uniquely identify which portion within the a-priori known transmitted secondary code sequence has been received. In contrast, in some other cases, i.e. for some other sequence of recognized secondary code symbols, a larger number of secondary code symbols must be recognized to uniquely determine which portion of the transmitted secondary code sequence has been received. Accordingly, the search tree may, for example, comprise an abort criterion indicating that a sufficient number of secondary code symbols has been recognized, wherein the abort criterion may occur in different steps of the process for different branches of the search tree. In other words, the pseudorange determinator may be configured to step-wisely increase a knowledge about the secondary code sequence until it is found that a knowledge about the acquired (received) secondary code sequence is sufficient to uniquely determine a position of the acquired portion of the secondary code sequence within a full period of a repetitive secondary code sequence. For example, the pseudorange determinator may be configured to decide, on the basis of the evaluation of the search tree (for example, a binary search tree) how many symbols should be evaluated in order to obtain a sufficient knowledge about the secondary code sequence, sufficient to uniquely determine a position of the acquired portion of the secondary code sequence within a full period of a repetitive secondary code sequence.

To conclude, the concept as described above taking reference to Fig. 4 allows for an efficient recognition of a transmitted code sequence, wherein the concepts may be used, for example, in a position determination of a navigation system.

### 4.4 Second Example

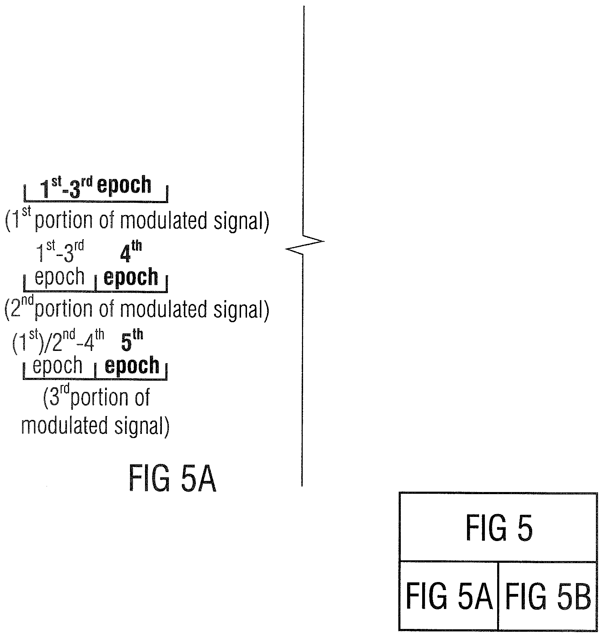

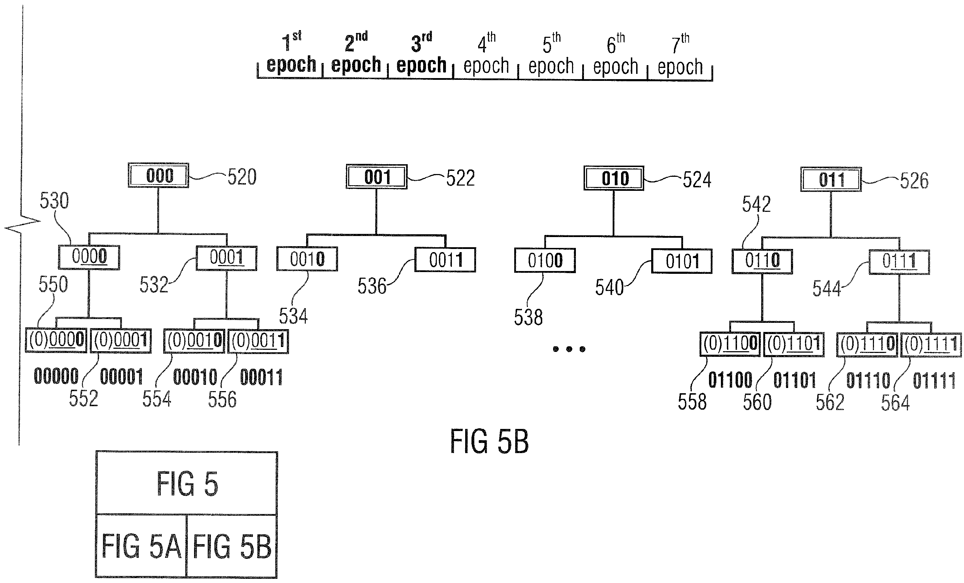

In the following, another example will be described taking reference to Fig. 5.

In the example according to Fig. 5, the reference sequences comprise three or more symbols (for example, of the secondary code sequence). For example, it is again assumed that the first symbol (the symbol of the first epoch) is "0".

In a first step, a first portion of the modulated signal is evaluated, wherein said first portion may comprise the first epoch, the second epoch and the third epoch (i.e. a portion of the received modulated signal, which comprises a length of three epochs). In the first step, the first portion of the modulated signal is compared with (for example, correlated with) four reference sequences 520, 522, 524, 526. Accordingly, it is determined to which of the reference sequences 520, 522, 524, 526 the first portion of the modulated signal is most similar. Accordingly, for the second step, the branch which is associated to the reference sequence having a maximum similarity with the first portion of the modulated signal is selected.

In a second step, a second portion of the modulated signal is evaluated, wherein the second portion of the modulated symbol comprises the first epoch, the second epoch, the third epoch and, in addition, the fourth epoch of the received modulated signal. For example, if it is found that the first portion of the modulated signal is the most similar to the first reference sequence 520 evaluated in the first step, reference sequences 530, 532 are applied in the second step. The reference sequence 530 is based on the reference sequence 520 and supplemented by a modulation symbol having a logic value of "0". Similarly, the reference sequence 532 is based on the reference sequence 520 and is supplemented by a modulation symbol which has a logic value of "1". Thus, the reference sequences 530, 532 are based upon the reference sequence 520 and supplemented by two different additional modulation symbols. Similarly, if it is found in the first step that the first portion of the modulated signal is most similar to the reference sequence 522, reference sequences 534 and 536 are used in the second step, wherein the reference sequences 534 and 536 are supplemented versions of the reference sequence 522 (supplemented by different modulation symbols having logic values "0" and "1", as shown in Fig. 5). Similarly, if it is found that the first portion of the modulation signal is most similar to reference sequence 524, reference sequences 538, 540 are used in a second step, and if it is found that the first portion of the modulated signal is most similar to reference sequence 526, reference sequences 542, 544 are used in the second step, wherein reference sequences 538, 540 are based on reference sequence 524, and wherein reference sequence 542, 544 are based on reference sequence 526.

Accordingly, in the second step, it is determined to which of the chosen reference sequences (which form a set of reference sequences) the second portion of the modulated signal is most similar. This can be done, for example, by evaluating a correlation value (using the chosen reference sequences).

A third step is based on the results of the second step. In the third step, a third portion of the modulated signal may be evaluated. For example the third portion of the modulated signal may comprise the second epoch, the third epoch, the fourth epoch, and additionally the fifth epoch of the received modulated signal. In other words, in the comparison (for example, correlation), which is performed in the third step, reference sequences are used which comprise four modulation symbols. The reference sequences which are used in the third step are based on the three last modulation symbols of the reference sequence identified to be most similar to the second portion of the modulated signal in the second step, and are further supplemented by additional modulation symbols (for example, additional modulation symbols having logic values of "0" and "1"). For example, if reference sequence 530 has been found to be most similar to the second portion of the modulated signal in the second step, reference sequences 550, 552 are used in the third step. However, it should be noted that the modulation symbol in brackets will not be considered for the comparison (or correlation). It should also be noted that the underlined portion of reference symbol 530 may form the basis of (or be equal to) the first three modulation symbols of the reference sequences 550, 552. Similarly, if the reference sequence 532 is found to be most similar to the second portion of the modulated signal in the second step, reference sequences 554, 556, which are based on reference sequence 532, are used in the third step (are compared with the third portion of the modulated signal). Again, only the four last (rightmost) modulation symbols of the reference sequences 554, 556 may be evaluated in the third step, wherein the underlined modulation symbols of reference sequence 554, 556 may be equal to the underlined modulation symbols of reference sequence 532. Similarly, reference sequences 558, 560 may be used in the third step if it is found, in the second step, that reference sequence 542 is most similar to the second portion of the modulated signal. Similarly, reference sequences 562, 564 may be used in the third step if it is found, in the second step, that reference sequence 544 is most similar to the second portion of the modulated signal.

To summarize, in the first step, four reference sequences are used, each of which comprises, for example of three modulation symbols. The reference symbols 520, 522, 524, 526 are compared with the first portion of the modulated signal, and the set of reference symbols to be used in the second step is selected in dependence on a result of the comparison. In the second step, reference sequences of an extended length, which comprises a second number of modulation symbols (wherein the second number of modulation symbols is larger than the first number of modulation symbols) are used. The reference sequences used in the second step are selected in dependence on a result of the comparison performed in the first step, and are supplemented versions of the most similar reference sequence identified in the first step. In the third step, reference sequences of the second length (comprising the second number of modulation symbols) are used, which are selected in dependence on the comparison performed in the second step, and which are based on the most similar reference sequence identified in the second step.

Accordingly, the sequence of modulation symbols of the secondary code, which is contained in the processed portion of the received modulated signal, is recognized, wherein an ambiguity may or may not remain. However, it should be noted that the characteristics and basic concepts underlying the first example may also apply in this second example.

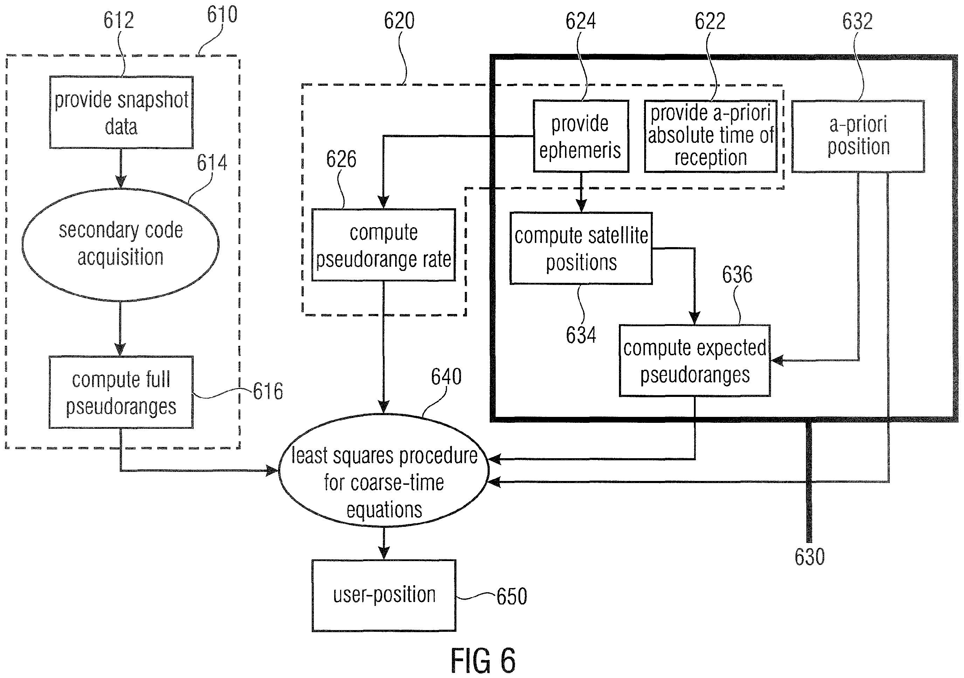

### 4.5 Method for Determining a User Position According to Fig. 6

Fig. 6 shows a flowchart of a method for determining a user position, according to an embodiment of the invention.

The method 600 according to Fig. 6 comprises providing 610 a pseudorange information.

Alternatively, or in addition, the method comprises providing 620 a pseudorange rate. Alternatively, or in addition, the method 600 comprises providing 630 an expected pseudorange information. However, the method comprises performing 640 a least squares procedure for coarse time equations. Moreover, the method 600 comprises providing 650 a user position.

In the following, the provision 610 of the full pseudorange information will be described in more detail. Providing 610 the full pseudorange information comprises providing 612 snapshot data, which may, for example, represent a received modulated signal, received at the side of a receiver. The received modulated signal may, for example, be one of the signals of a global positioning system, like GPS, GLONASS, BeiDou or Galileo.

Providing 610 full pseudoranges may also comprise a secondary code acquisition 614, which may be based on the snapshot data provided in step 612, and which may, for example, be performed using the concepts described above with reference to Figs. 1 to 5. Providing 610 full pseudorange information also comprises computing 616 full pseudoranges. For example, the full pseudorange information may be computed on the basis of a determination which portion of the secondary code was received at which time. However, since time measurement at the side of the receiver may be inaccurate, it may not be possible to determine the distance between the transmitter and the receiver very precisely. Accordingly, the approximate information about the distance between the transmitter and the receiver, which is obtained on the basis of the secondary code information, is designated as a "pseudorange" information.

Moreover, it should be noted that the full pseudorange information may be input into the least squares procedure 640 for coarse time equations.

Optionally, the provision 620 of the pseudorange rate information and the provision 630 of expected pseudoranges may also be performed.

The provision 620 of the pseudorange rate is based on a provision 622 of an a-priori absolute time of reception. The absolute time of reception may, for example, be provided using a clock of the receiver. The provision 620 of the pseudorange rate may also comprise a provision 624 of an ephemeris. Moreover, the provision 620 of the pseudorange rate may comprise a computation 626 of the pseudorange rate information, wherein the computation of the pseudorange rate information may be based on the provision of the ephemeris, and wherein the provision of the ephemeris may be based on the provision of the a-priori absolute time of reception. The computed pseudorange rate information may also be used in the least squares procedure 640 for coarse time equations.

Moreover, the provision 630 of the expected pseudoranges may also be based on the provision 622 of an a-priori absolute time of reception information and provision 624 of the ephemeris. Moreover, the provision 630 of the expected pseudorange information may comprise a provision 632 of an a-priori position information.

Moreover, the provision 630 of the expected pseudorange information may comprise a computation 634 of satellite positions, which may be based on the provision 622 of an a-priori absolute time of reception information and provision 624 of the ephemeris. Moreover, the provision 630 of an expected pseudorange information may comprise a computation 636 of the expected pseudorange information, wherein said computation 636 may be based on the computation 634 of the satellite positions and also on the basis of the provision 632 of the a-priori position information. The computed expected pseudorange information and the a-priori position information may also be provided to the least squares procedure 640 for coarse time equations.

In the least squares procedure 640 for coarse time equations, a coarse estimate of the user position may be provided on the basis of the full pseudorange information, and also on the basis of the pseudorange rate information and the expected pseudorange information. Moreover, the a-priori position information is used in the least squares procedure 640.

Moreover, the provision 650 of the user position may be based on the least squares procedure 640, wherein the a refinement of the user position may be performed in step 650.

To conclude, the provision 610 of the full pseudorange information may substantially simplify the determination of the user position. In particular, if reliable full pseudorange information is provided, systematic ambiguities which may arise from the estimation of pseudoranges according to conventional concepts may be a avoided. Consequently, iterations, which may be caused by systematic ambiguities of the pseudorange information in conventional concepts may be avoided. Rather, the "right" pseudorange information may be available even in the first iteration, which substantially facilitates the computation of the user position.

To further conclude, the concept as described above, taking reference to Figs. 1 and 5, simplifies the determination of the user position in a global navigation system. Worded differently, an embodiment according to the invention creates a global navigation apparatus comprising the pseudorange determinator as described in detail above.

### 4.6. Conclusions

In the following, concepts according to the present invention will be summarized.

Embodiments according to the invention are based on the idea that instead of using the pseudorange ambiguity resolution technique from van Diggelen (as mentioned above), a different approach is chosen by using the GNSS signal's secondary code (e.g. pilot components, where available) to get a non-ambiguous pseudorange measurement directly.

Modern GNSS code signals, like the Galileo pilot signals E1C, E5aQ and E5bQ, and also some modernized GPS ones, use a secondary code on top of their primary spreading code (primary code) to generate a long "tiered" code with a duration that is the product of primary code and secondary code length. The primary reason for this long tiered code is to mitigate cross-correlation effects.

Some details regarding a tiered code creation have been described above taking reference to Fig. 3.

For the Galileo pilot signals E1C, E5aQ and E5bQ, the overall tiered code period is 100 ms. A tiered code length of 100 ms can resolve distances of approximately 30,000 km in an unambiguous way which is enough for a direct measurement of the distance between satellite and receiver. In case of GPS L1C/A, where the code repetition of only one millisecond is available, the unambiguous resolvable distance is only approximately 300 km, leading to the required van Diggelen technique.

However, in the standard acquisition method, one only acquires one primary code sequence to obtain the ambiguous pseudorange measurement. Therefore, one does not directly know, at which point in the secondary code the measurement was taken leading to an ambiguity again.

The idea of the present invention is to utilize a new search method exploiting the fact that the secondary code sequences are a-priori knowledge.

The secondary code acquisition is an acquisition algorithm that reconstructs both the code phase offset and the secondary code. With the reconstruction of secondary code and known code phase offset, the full pseudoranges can be computed directly. In the case of the secondary code acquisition, full pseudorange computation is not based on the prediction of the user position. Accordingly, it is one advantage of the procedure, that no matter what a-priori user position was given, the position converges to the actual, exact user position.

Some details regarding the inventive concepts have been shown in Figs. 4 and 5.

Fig. 4 shows a pilot secondary binary tree. In each step, the method according to the present invention does two correlations using a coherent one with two consecutive replica epochs: the first correlation is done with both epochs having the same phase (e.g. [+1 +1]; reference sequences 420, 430, 436, 440, 443, 444, 447, and so on), the second correlation is done with epochs having the opposite code phase (e.g. [+1 -1]; reference sequences 422, 432, 434, 441, 442, 445, 446). The two resulting correlation peaks are compared and the larger one (the higher correlation, typically approximately twice as high) is identified as the correct estimation. This double correlation method is repeated according to the a priori known binary search tree of the secondary code. There is no need to go through all branches, instead of that in each step the decision for a single branch is made.

Worded differently, in each step, a portion of the received modulated signal, which has a length of two epochs, is correlated with two reference sequences, wherein a first reference sequence comprises two copies (instances) of the epoch (which is a-priori known) having same phases, and wherein a second reference sequence comprises two copies (instances) of the epoch having opposite phases (or being weighted with opposite values). The correlation between the currently considered portion of the received modulated signal and the first reference sequence typically results in a first correlation peak, and the correlation between the currently considered portion of the received modulated signal with the second reference sequence results in a second correlation peak. The heights of the first correlation peak and of the second correlation peak may be substantially different. Moreover, it should be noted that the reference sequence resulting in the higher (or highest) correlation peak is considered as the reference sequence being most similar with the currently considered portion of the received modulated signal. Accordingly, it is assumed that the modulation symbol (or modulation symbols) associated with the reference sequence resulting in the higher (or highest) peak are included in the modulated signal.

Finally, the computed estimated secondary code phases at the output are compared with the known secondary code. Then the millisecond integer part is computed directly.

Worded differently, if a portion of the secondary code (which may be shorter than the full length of the secondary code) has been identified in the iterative procedure mentioned above, a search may be performed where exactly within a full period of the secondary code sequence the identified portion of the secondary code sequence can be found. On the basis of this determination the time between the transmission of the modulated signal and the reception of the modulated signal at the side of the receiver can be determined.

When using GPS satellites, ambiguities can still occur because their secondary code in the case of both L2 and L5 signals has the length of 20 ms when in the case of Galileo satellites the length of the secondary code is 100 ms. This is the reason of two possible millisecond integer values when the recovered bits of the secondary codes give the integer value between 4 ms and 9 ms. This conclusion is based on the fact from [10] that the range of integer values for GPS signals is between 64 ms and 89 ms due to the minimum/maximum reception time from the GPS satellites' orbit heights. In that case, the decision is made which values to take and the a-posteriori residual is used to confirm that decision. If a posteriori residual is too large, another possible value is taken.

In a comparison example, in the case of the L1 GPS signal, there is no secondary code present but we know that the signal is modulated with a navigation message where one bit corresponds to 20 symbols. For this case, we define the secondary code as 20 consecutive ones and search through the binary tree for the first bit edge. Based on this fact, the same method to recover the integers can be used as in the case of L2 and L5 signals. The problem may occur when the bit edge occurs not as soon as actually wanted.

In the following, some advantages and issues of the proposed concept and method will be described.

When compared to the van Diggelen approach (confer reference [10]), it should be noted that no constraint is applied on the accuracy of the a-priori user position. In the case when a-priori position in the van Diggelen approach is not under the constraint condition, additional iterations have to be done which leads to the longer computation time. So, the van Diggelen approach has two uncertainties, both in position and time, while the approach described herein has just uncertainty in time. Also, from a theoretical aspect, using the secondary code acquisition, millisecond ambiguity should be solved (or can be solved), what results in a possibility not to use the coarse time navigation equations, but normal navigation equations with an assumption that an initial error in time is smaller than 10 ms after correcting it for full pseudoranges. Beside that there is no constraint on the accuracy of the a-priori position, secondary code acquisition enables the use of a more accurate time of transmission.

In the following, some minor disadvantages of the proposed method will be mentioned, which however can be overcome without any problems.

One possible problem arises if one bit/symbol goes lost/is detected wrong in the acquisition process. However, this problem can, for example, be overcome using a reliable correlation concept. Also, it has been found that the risk that one bit/symbol goes lost or is detected wrong is sufficiently small in view of the fact that overlapping portions of the received modulated signal are processed.

Moreover, in case of GPS, some 20 ms ambiguities occur. However, it has been found that this problem is solvable, as mentioned above, and also detectable.

Moreover, it should be noted that, in comparison to the concept described herein, the approaches according to references [13] and [15] are following all possible solutions and making a final decision at the end. Also, the conventional approaches do the correlation with the whole currently available replica. It has been found that using a conventional approach has an influence on the performance length and computational load. In contrast, an advantage of the approach described herein is that it follows just one suitable sequence of symbols knowing that it will result with correctly recovered secondary code. Worded differently, according to the present invention, the correlations are performed step-by-step, wherein different but typically overlapping portions of the received modulated signal are processed. The knowledge about the received secondary code is increased step-wisely.

Moreover, it should be noted that the problem that the local clock is not synchronized to GPS time (or, generally, to the time of the Global Positioning System) is solved through the coarse time navigation equations in some embodiments according to the present invention.

Moreover, it should be noted that the concept as described herein is directed to solving the problem of millisecond integer ambiguity in a position detection system. Embodiments according to the invention are related to the question how to resolve the unambiguous pseudoranges and to compute GPS receiver positions without using absolute time information.

To further conclude, for some applications, the calculation of the position using global navigation satellite systems (GNSS) is not needed instantaneously and can be outsourced to another device, e.g. a server, where the position is calculated "offline". Previous solutions suffer from ambiguities in the pseudorange measurements that have to be resolved leading to further constraints. Embodiments according to the invention propose a method to directly measure an unambiguous pseudorange exploiting the secondary codes on the modernized GNSS signals by doing both code and secondary code measurements in the acquisition function at the same time.

Moreover, it should be noted that embodiments according to the invention are based on the idea to make a decision about the secondary code bits in every step between two possible bits.

It should be noted that embodiments according to the present invention are based on the idea to exploit pilot channel signal information. Also, it should be noted that some problems which arise in the conventional approaches are overcome because in the embodiments according to the present invention, no a priori position is needed.

Embodiments according to the invention can be used in the field of satellite navigation.

### 4.7. Verification with Recorded Data

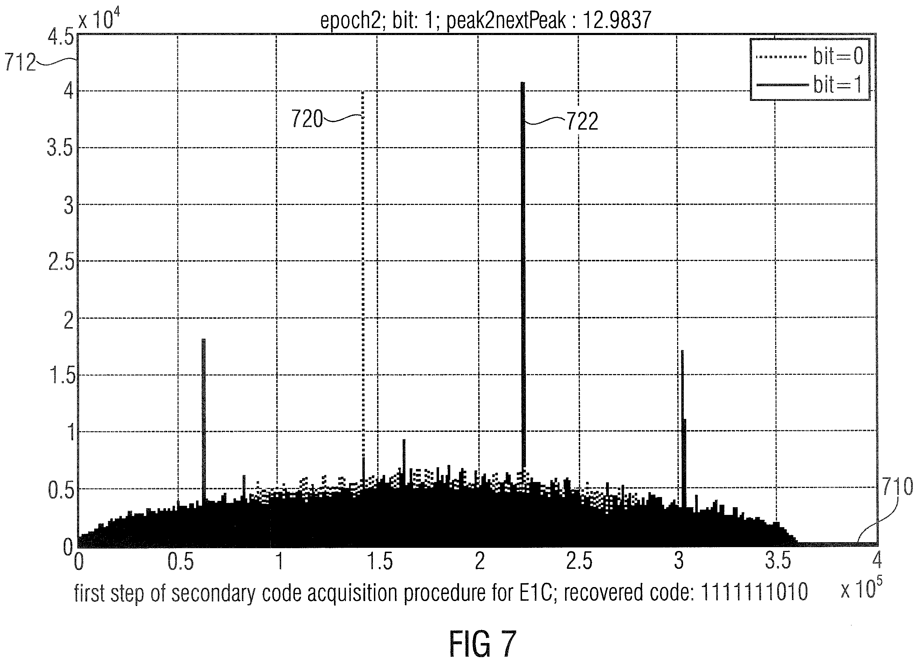

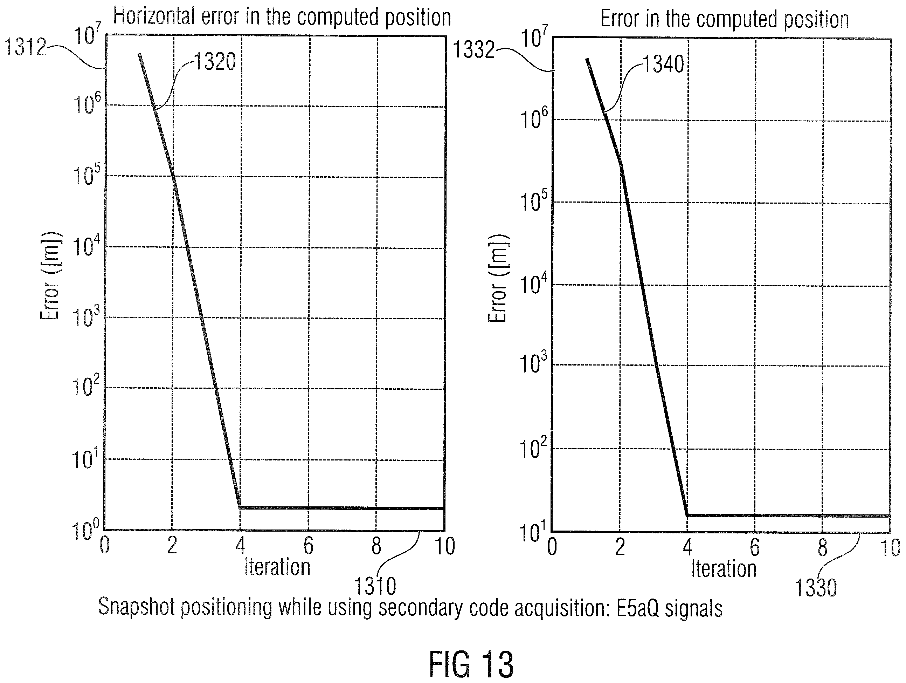

For a verification of the algorithm described above, figures of peaks have been determined. The results presented are done using snapshots from Spirent. Figures 7 to 12 show the decision process where the connection between primary and secondary codes is obvious. This is the general secondary code acquisition. When incorporated with snapshot positioning results presented in Figures 13 to 15 and 16 were derived using the ENU position (0,0,0) as starting position.
Figures showing these peaks will be briefly described in the following.

Fig. 7 shows a schematic representation of a first step of a secondary code acquisition procedure for E1C, wherein the recovered code is "1111111010".

An abscissa 710 describes a time shift in terms of the reciprocal sampling interval used. An ordinate 712 describes a correlation value. As can be seen, a first peak 720 corresponds to a bit value of "0", and a second peak 722 corresponds to a bit value of "1". As can be seen, it is not easily possible to distinguish between a bit value of "0" and a bit value of "1" in the first step of the correlation. For example, an assumption may be made that the first bit value is "0" or "1". However, since the peak 722 is slightly higher than the peak 720, a bit value of "1" (represented by a modulation symbol of the secondary code sequence) can be recognized.

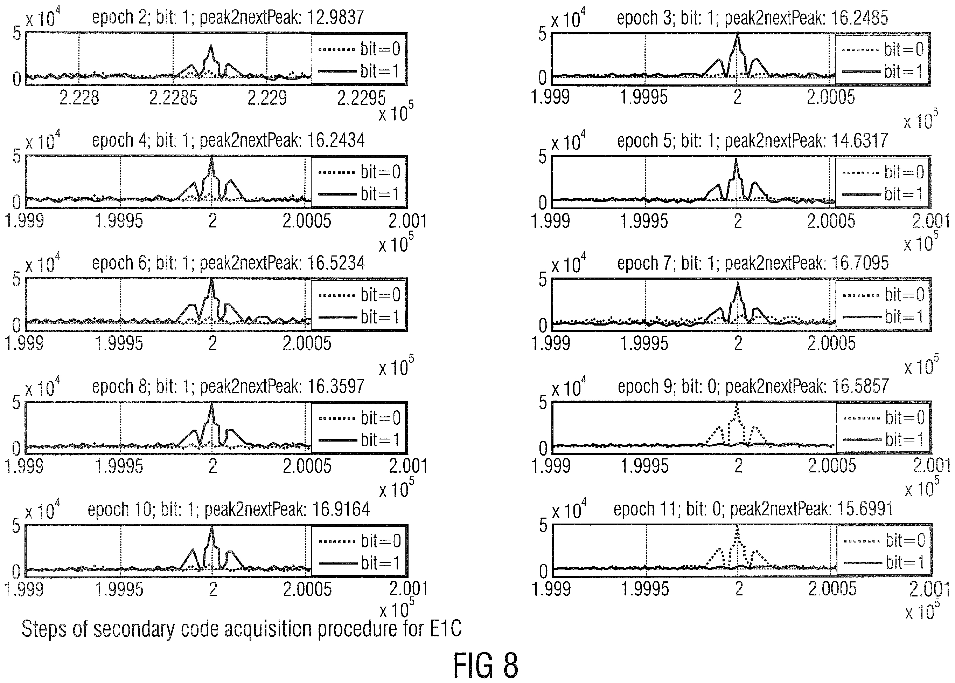

Fig. 8 shows a graphical representation of steps of the secondary code acquisition procedure for E1C. Correlation results for different epochs (epoch 2 to epoch 11) are shown, wherein it can be seen that the correlation results for epochs 2 to 8 and 10 indicate a bit value of "1", and wherein the correlation results for epochs 9 and 11 indicate a bit value of "0". Moreover, it should be noted that very clear correlation peaks for the actual bit value can be recognized.

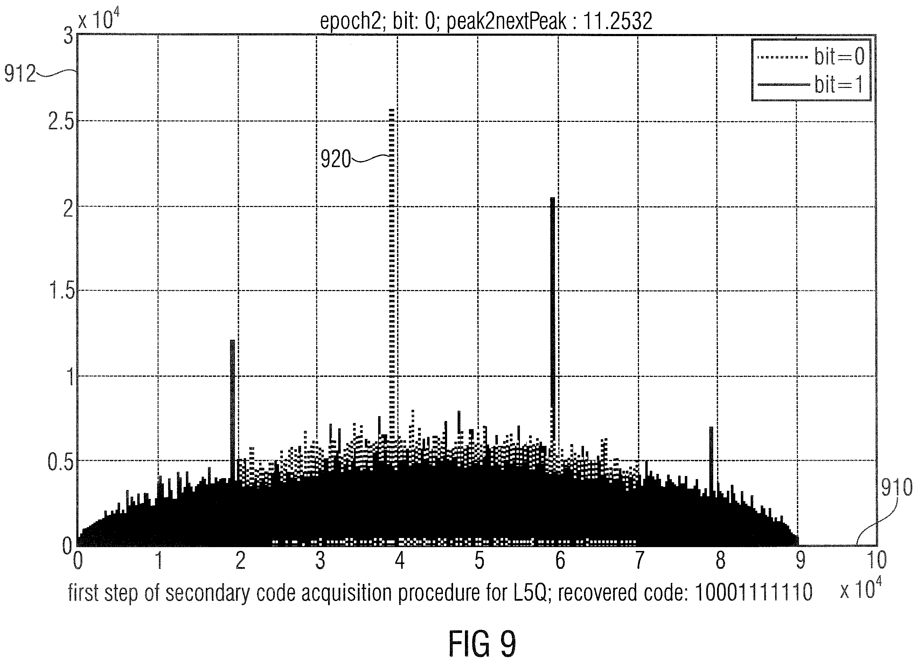

Fig. 9 shows a schematic representation of a first step of a secondary code acquisition procedure for L5Q, wherein the recovered code is "10001111110". An abscissa 910 describes a time shift in the reciprocal sampling interval used, and an ordinate 912 describes a correlation value. As can be seen, there is a clear peak 920, which is associated with a bit value of "0".

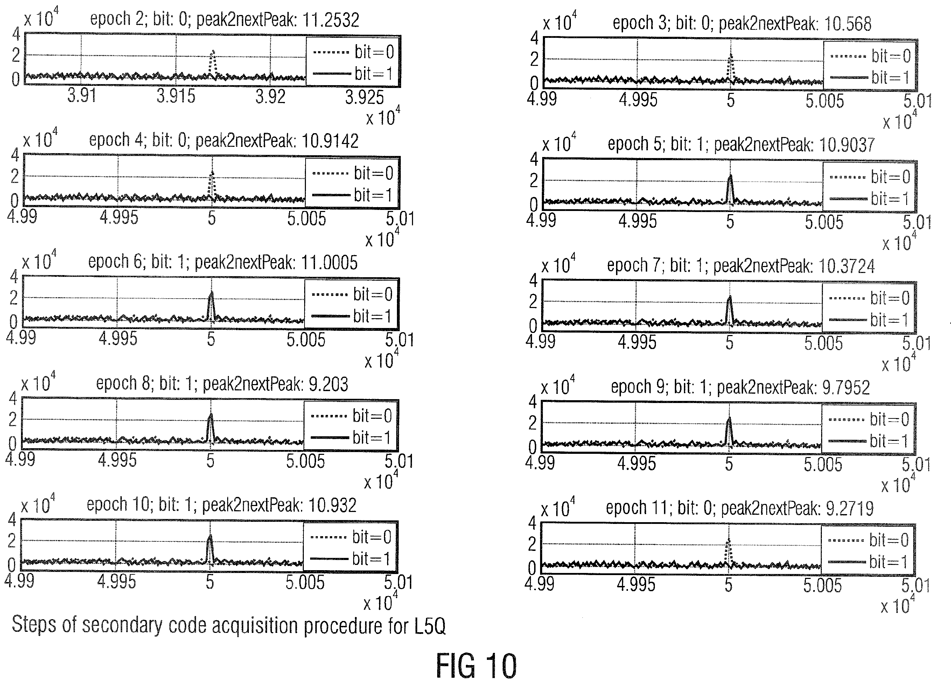

Fig. 10 shows steps of a secondary code acquisition procedure for L5Q. In particular, correlation results for the evaluation of epoch 2 to epoch 11 are shown. As can be seen, clear correlation peaks associated with a bit value of "0" are shown for epochs 2, 3 and 4. Clear correlation peaks associated with a bit value of "1" are shown for epochs 5, 6, 7, 8, 9 and 10. Moreover, a clear correlation peak associated with bit value "0" can be seen epoch 11.

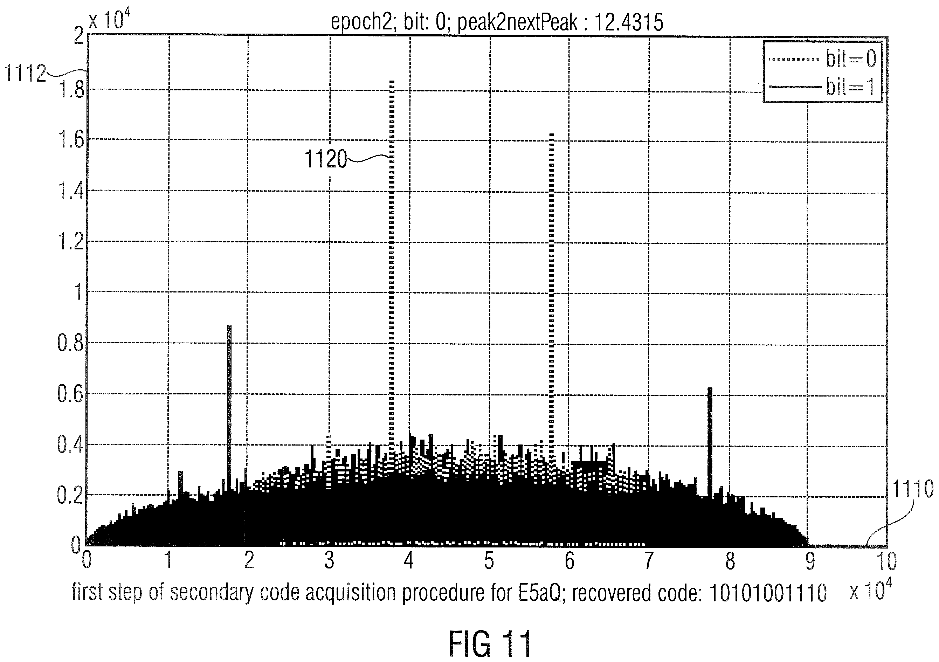

Fig. 11 shows a graphic representation of a first step of a secondary code acquisition procedure for E5aQ, wherein the recovered code is "10101001110". An abscissa 1110 describes a time shift in the reciprocal sampling interval used, and an ordinate 1112 describes a correlation value. As can be seen, a main peak 1120, which is associated with a bit value of "0", is obtained.

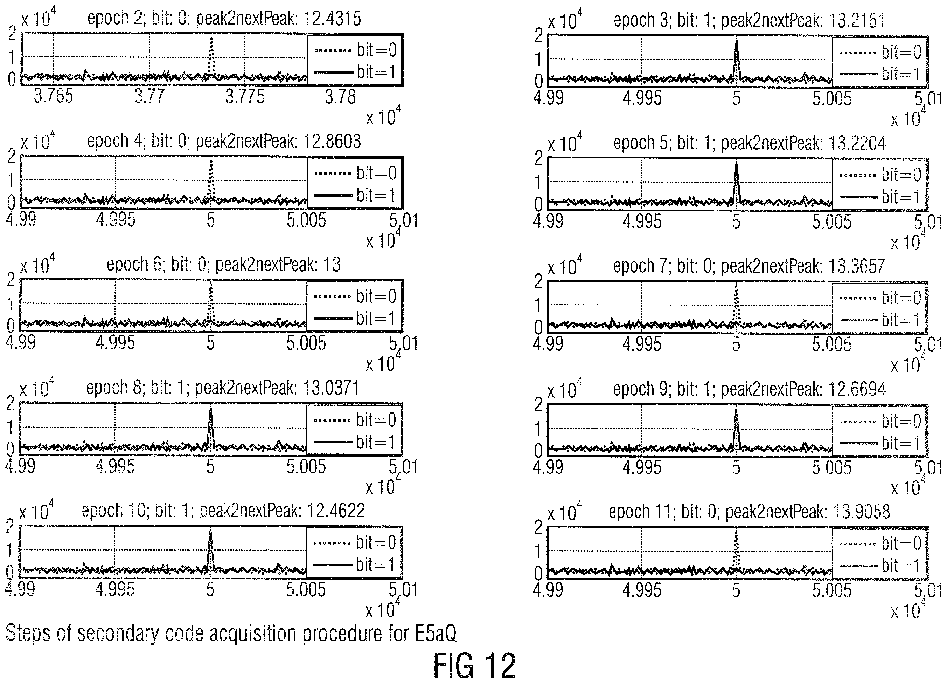

Fig. 12 shows the steps of a secondary code acquisition procedure for E5aQ. It can be seen that clear correlation peaks associated with a bit value of "0" are obtained for epochs 2, 4, 6, 7 and 11. Moreover, clear correlation peaks associated with a bit value of "1" are obtained for epochs 3, 5, 8, 9 and 10.

Fig. 13 shows a graphic representation of results for a snapshot positioning while using secondary code acquisition, wherein E5aQ signals are evaluated. An abscissa 1310 describes a number of an iteration, and an ordinate 1312 describes an error in meters. A curve 1320 describes a horizontal error in the computed position.

As can be seen, the horizontal error can be quickly reduced, such that the horizontal error is below 10 m in the fourth iteration.

In a second diagram, an abscissa 1330 describes a number of the iteration, and an ordinate 1332 describes an error in meters. A curve 1340 describes an error in the computed position. Again, it can be seen that the error in the computed position can be reduced down to less than 20 m in the fourth iteration.

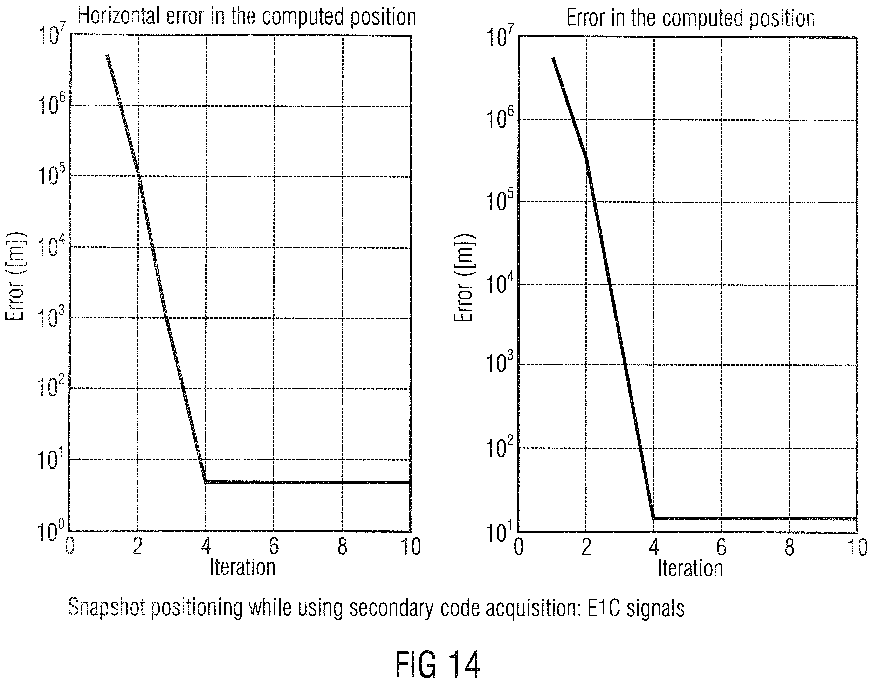

Fig. 14 shows a graphic representation of results when performing a snapshot positioning while using a secondary code acquisition, wherein E1C signals are used. Again, it can be seen that the horizontal error in the computed position can be brought down to less than 10 m in the fourth iteration, and that the error in the computed position can be brought to a value below 20 m in the fourth iteration.

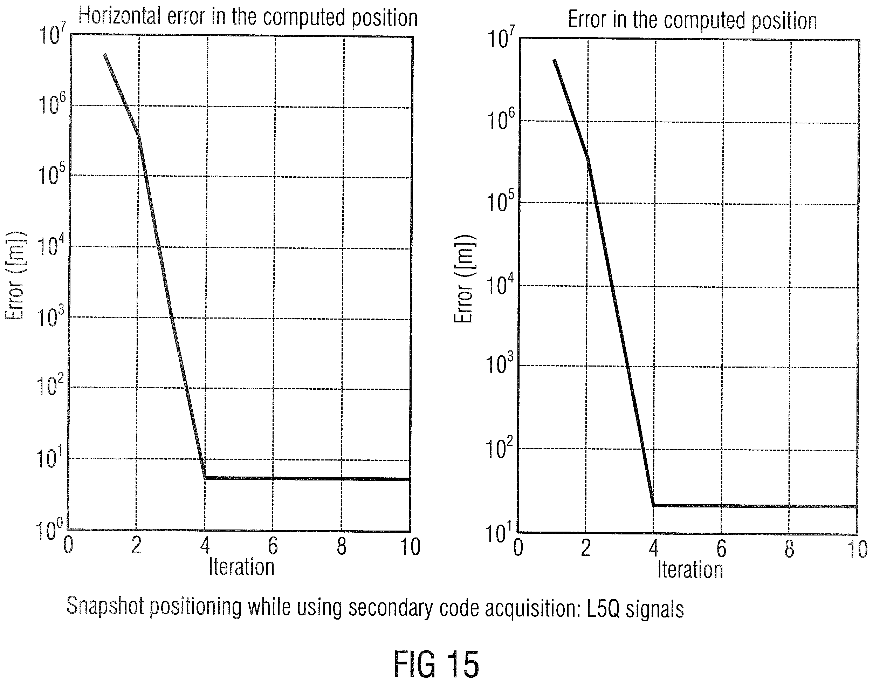

Fig. 15 shows a graphic representation of results when performing snapshot positioning while using a secondary code acquisition, wherein L5Q signals are used. Again, it can be seen that a horizontal error in the computed position can be brought down to below 10 m already in the fourth iteration, and that the error in the computed position can be brought down to approximately 20 m already in the fourth iteration.

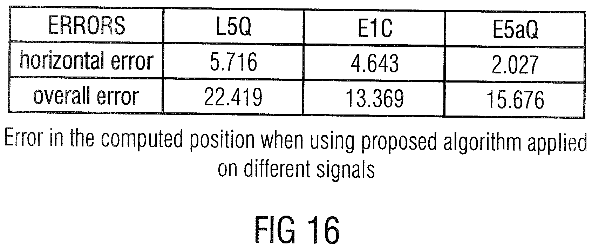

Fig. 16 shows a table representing an error in the computed position when using the proposed algorithm applied on different signals. It can be seen that a very small horizontal error can be obtained using the concept according to the present invention.

### 7. Implementation Alternatives

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### References

[1] Elliot D. Kaplan, Christopher J. Hegarty: "Understanding GPS: Principles and Applications", Second edition, 2006 Artech House, Inc. ,Norwood
[2] "European GNSS (Galileo) Open Service Signal in Space Interface control document"
[3] Joon Wayn Cheong, Jinghui Wu, Andrew G. Dempster: "A-GPS based Snapshot Receiver with FFT-accelerated Collective Detection: Time Synchronization and Search Space Analysis"
[4] Niilo Sirola, Paula Syrjarinne: "Solving GPS Time and Position without Navigation Data", Proceedings of the ENC-GNSS 2002.
[5] Niilo Sirola: "A method for GPS positioning without current navigation data", Master of science thesis
[6] Paula Konvenoja: "Efficient Satellite orbit approximation", Proceedings of ION GPS 2000, September 19-22, 2000, Salt Lake Cit, USA, pages 1930-1937.
[7] Dominik Dötterböck and Bernd Eissfeller: "A GPS/Galileo Software Snap-shot receiver for mobile-phones"
[8] Jinghui Wu, Andrew G. Dempster: "Data Compression for Assisted GPS Signal Processing"
[9] Penina Axelrad, Ben K. Bradley, Jill Tombasco, Shan Mohiuddin, James Donna: "GEO Satellite Positioning Using GPS Collective Detection", 23rd International Technical Meeting of the Satellite Division of the Institute of Navigation, Portland, OR, September 21-24, 2010
[10] Frank van Diggelen: "A-GPS: Assisted GPS, GNSS and SBAS", Artech House, Boston/London
[11] Sergio Carrasco-Martos, Gustavo Lopez-Risueno, David Jimenez-Banos, Eberhard Gill: "Snapshot Software Receiver for GNSS in Weak Signal Environments: An Innovative Approach for Galileo E5"
[12] Sergio Carrasco-Martos, David Jimenez-Banos, Gustavo Lopez-Risueno: "Galileo E5a/E5b acquisition technique for weak signal environments", Navitec 2008
[13] Claudio Palestini: "Synchronization and detection techniques for navigation and communication systems"
[14] Bron H. Chen, Maria E. Palamara, Charles Varvaro: "US 6,748,224 B1"
[15] Giovanni E. Corazza, Claudio Palestini, Raffaella Pedone, Marco Villanti: "Galileo Primary Code Acquisition based on Multi-hypothesis Secondary code ambiguity elimination", ION GNSS 20th International Technical Meeting of the Satellite Division, 25-28, September 2007, Fort Worth, TX

## Claims

1. A pseudorange determinator (100; 610) for providing a pseudorange information (112) representing an estimate of a distance between a transmitter and a receiver on the basis of a modulated signal (110) comprising a sequence of symbols, wherein a primary code sequence is modulated in accordance with a secondary code sequence, wherein the pseudorange determinator is configured to
step-wisely correlate a portion of a received signal comprising at least two modulation symbols of the secondary code sequence with at least two reference sequences (420,422; 430,432; 434,436; 440,441; 442,443; 444,445; 446,447 or 530,532,534,536,538,540,542,544; 550,552; 554,556, 558,560; 562,564), a first reference sequence representing at least two subsequent symbols of the secondary code sequence having same phases and a second reference sequence representing at least two subsequent symbols of the secondary code sequence having different phases, to
step-wisely acquire, in dependence on a result of the correlations, a portion of the secondary code sequence; and
wherein the pseudo range determinator is configured to provide the pseudorange information on the basis of an acquisition of a sufficient portion of the secondary code sequence;
wherein the pseudorange determinator is configured to determine, in a first step, which reference sequence out of the at least two reference sequences (420,422) is most similar to a first portion of the received signal comprising at least two modulation symbols of the secondary code sequence; and
wherein the pseudorange determinator is configured to determine, in a second step, which reference sequence, out of at least two reference sequences (430,432; 434,436) of a second set of reference sequences, is most similar to a second portion of the received signal comprising at least two modulation symbols of the secondary code sequence,
wherein the second portion of the received signal overlaps with the first portion of the received signal and the reference sequences of the second set of reference sequences begin with one or more symbols recognized at the end of the first portion of the received signal in the first step;
wherein the pseudorange determinator is configured to correlate different portions of the received signal with at least two respective reference sequences, such that one or more modulation symbols of the secondary code sequence are recognized with each correlation step, and such that more and more modulation symbols of the secondary code sequence are recognized within the received modulated signal.

2. The pseudorange determinator (100; 610) according to claim 1, wherein the pseudorange determinator is configured to choose the second set of reference sequences (430,432; 434,436) in dependence on a result of the determination made in the first step.

3. The pseudorange determinator (100; 610) according to claim 1 or claim 2, wherein the pseudorange determinator is configured to determine, in one or more additional steps, which reference sequence, out of at least two reference sequences (440,441; 442,443; 444,445; 446,447) of one or more additional sets of reference sequences, is most similar to a respective portion of the received signal comprising at least two symbols,
wherein a respective currently processed portion of the received signal overlaps with a respective previously processed portion of the received signal.

4. The pseudorange determinator (100; 610) according to one of claims 1 to 3, wherein the pseudorange determinator is configured to step-wisely increase a knowledge about the secondary code sequence,
wherein the pseudorange determinator is configured to use previously acquired knowledge about the secondary code sequence to increase a knowledge about the secondary code sequence.

5. The pseudorange determinator (100; 610) according to one of claims 1 to 4, wherein the pseudorange determinator is configured to use a search tree or a binary search tree in order to step-wisely acquire the portion of the secondary code sequence.

6. The pseudorange determinator (100; 610) according to claim 5, wherein the pseudorange determinator is configured to select a branch of the search tree or of the binary search tree in response to a result of a correlation of a portion of a received signal comprising at least two symbols with at least two reference sequences (420,422).

7. The pseudorange determinator (100; 610) according to one of claims 1 to 6, wherein the pseudorange determinator is configured to step-wisely increase a knowledge about the secondary code sequence until it is found that a knowledge about the secondary code sequence is sufficient to uniquely determine a position of the acquired portion of the secondary code sequence within a full period of a repetitive secondary code sequence.

8. The pseudorange determinator (100; 610) according to claim 7, wherein the pseudorange determinator is configured to decide, on the basis of an evaluation of a search tree or a binary search tree, how many symbols should be evaluated in order to obtain a sufficient knowledge about the secondary code sequence, sufficient to uniquely determine a position of the acquired portion of the secondary code sequence within a full period of a repetitive secondary code sequence.

9. The pseudorange determinator (100; 610) according to one of claims 1 to 8,
wherein the modulated signal is a pilot signal of a satellite-based global navigation system;
wherein the primary code sequence is a spreading code of the satellite-based global navigation system; and
wherein the secondary code sequence is an overlay code of the satellite-based global navigation system.

10. The pseudorange determinator (100; 610) according to one of claims 1 to 9, wherein the second reference sequence (422) represents at least two subsequent symbols having opposite phases.

11. The pseudorange determinator (100; 610) according to one of claims 1 to 10, wherein the pseudorange determinator is configured to use an a-priori knowledge of the primary and secondary code sequence in order to provide the pseudorange information.

12. A method (200) for providing a pseudorange information representing an estimate of a distance between a transmitter and a receiver on the basis of a modulated signal comprising a sequence of symbols, wherein a primary code sequence is modulated in accordance with a secondary code sequence, the method comprising:
step-wisely correlating (210) a portion of a received signal comprising at least two modulation symbols of the secondary code sequence with at least two reference sequences, (420,422; 430,432; 434,436; 440,441; 442,443; 444,445; 446,447 or 530,532,534,536,538,540,542,544; 550,552; 554,556, 558,560; 562,564) a first reference sequence representing at least two subsequent symbols of the secondary code sequence having same phases and a second reference sequence representing at least two subsequent symbols of the secondary code sequence having different phases, to step-wisely acquire, in dependence on a result of the correlations, a portion of the secondary code sequence; and
providing (220) the pseudorange information on the basis of an acquisition of a sufficient portion of the secondary code sequence;
wherein the method comprises determining, in a first step, which reference sequence out of the at least two reference sequences (420,422) is most similar to a first portion of the received signal comprising at least two modulation symbols of the secondary code sequence; and
wherein the method comprises determining, in a second step, which reference sequence, out of at least two reference sequences (430,432; 434,436) of a second set of reference sequences, is most similar to a second portion of the received signal comprising at least two modulation symbols of the secondary code sequence,
wherein the second portion of the received signal overlaps with the first portion of the received signal and the reference sequences of the second set of reference sequences begin with one or more symbols recognized at the end of the first portion of the received signal in the first step;
wherein different portions of the received signal are correlated with at least two respective reference sequences, such that one or more modulation symbols of the secondary code sequence are recognized with each correlation step, and such that more and more modulation symbols of the secondary code sequence are recognized within the received modulated signal.

13. A computer program adapted to perform the method according to claim 12 when the computer program runs on a computer.

## Patentansprüche

1. Eine Pseudoentfernungsbestimmungseinrichtung (100; 610) zum Bereitstellen von Pseudoentfernungsinformationen (112), die eine Schätzung eines Abstands zwischen einem Sender und einem Empfänger auf der Basis eines modulierten Signals (110) darstellen, das eine Sequenz von Symbolen aufweist, wobei eine Primärcodesequenz gemäß einer Sekundärcodesequenz moduliert wird, wobei die Pseudoentfernungsbestimmungseinrichtung dazu konfiguriert ist,
einen Abschnitt eines empfangenen Signals, der zumindest zwei Modulationssymbole der Sekundärcodesequenz aufweist, schrittweise mit zumindest zwei Referenzsequenzen (420,422; 430,432; 434,436; 440,441; 442,443; 444,445; 446,447 oder 530,532,534,536,538,540,542,544; 550,552; 554,556, 558,560; 562,564) zu korrelieren, wobei eine erste Referenzsequenz zumindest zwei nachfolgende Symbole der Sekundärcodesequenz, die dieselben Phasen aufweisen, darstellt, und eine zweite Referenzsequenz zumindest zwei nachfolgende Symbole der Sekundärcodesequenz darstellt, die unterschiedliche Phasen aufweisen, darstellt, um
in Abhängigkeit von einem Ergebnis der Korrelationen schrittweise einen Abschnitt der Sekundärcodesequenz zu erfassen; und
wobei die Pseudoentfernungsbestimmungseinrichtung dazu konfiguriert ist, die Pseudoentfernungsinformationen auf der Basis einer Erfassung eines ausreichenden Abschnitts der Sekundärcodesequenz bereitzustellen;
wobei die Pseudoentfernungsbestimmungseinrichtung dazu konfiguriert ist, in einem ersten Schritt zu bestimmen, welche Referenzsequenz der zumindest zwei Referenzsequenzen (420,422) einem ersten Abschnitt des empfangenen Signals, der zumindest zwei Modulationssymbole der Sekundärcodesequenz aufweist, am ähnlichsten ist; und
wobei die Pseudoentfernungsbestimmungseinrichtung dazu konfiguriert ist, in einem zweiten Schritt zu bestimmen, welche Referenzsequenz von zumindest zwei Referenzsequenzen (430,432; 434,436) eines zweiten Satzes von Referenzsequenzen einem zweiten Abschnitt des empfangenen Signals, der zumindest zwei Modulationssymbole der Sekundärcodesequenz aufweist, am ähnlichsten ist,
wobei sich der zweite Abschnitt des empfangenen Signals mit dem ersten Abschnitt des empfangenen Signals überlappt und die Referenzsequenzen des zweiten Satzes von Referenzsequenzen mit einem oder mehreren Symbolen beginnen, die an dem Ende des ersten Abschnitts des empfangenen Signals in dem ersten Schritt erkannt werden;
wobei die Pseudoentfernungsbestimmungseinrichtung dazu konfiguriert ist, unterschiedliche Abschnitte des empfangenen Signals mit zumindest zwei jeweiligen Referenzsequenzen derart zu korrelieren, dass mit jedem Korrelationsschritt ein oder mehrere Modulationssymbole der Sekundärcodesequenz erkannt werden und
dass mehr und mehr Modulationssymbole der Sekundärcodesequenz in dem empfangenen modulierten Signal erkannt werden.

2. Die Pseudoentfernungsbestimmungseinrichtung (100; 610) gemäß Anspruch 1, wobei die Pseudoentfernungsbestimmungseinrichtung dazu konfiguriert ist, den zweiten Satz von Referenzsequenzen (430,432; 434,436) in Abhängigkeit von einem Ergebnis der bei dem ersten Schritt vorgenommenen Bestimmung zu wählen.

3. Die Pseudoentfernungsbestimmungseinrichtung (100; 610) gemäß Anspruch 1 oder Anspruch 2, wobei die Pseudoentfernungsbestimmungseinrichtung dazu konfiguriert ist, in einem oder mehreren zusätzlichen Schritten zu bestimmen, welche Referenzsequenz von zumindest zwei Referenzsequenzen (440,441; 442,443; 444,445; 446,447) eines oder mehrerer zusätzlicher Sätze von Referenzsequenzen einem jeweiligen Abschnitt des empfangenen Signals, der zumindest zwei Symbole aufweist, am ähnlichsten ist,
wobei sich ein jeweiliger aktuell verarbeiteter Abschnitt des empfangenen Signals mit einem jeweiligen zuvor verarbeiteten Abschnitt des empfangenen Signals überlappt.

4. Die Pseudoentfernungsbestimmungseinrichtung (100; 610) gemäß einem der Ansprüche 1 bis 3, wobei die Pseudoentfernungsbestimmungseinrichtung dazu konfiguriert ist, ein Wissen über die Sekundärcodesequenz schrittweise zu vergrößern,
wobei die Pseudoentfernungsbestimmungseinrichtung dazu konfiguriert ist, zuvor gewonnenes Wissen über die Sekundärcodesequenz dazu zu verwenden, ein Wissen über die Sekundärcodesequenz zu vergrößern.

5. Die Pseudoentfernungsbestimmungseinrichtung (100; 610) gemäß einem der Ansprüche 1 bis 4, wobei die Pseudoentfernungsbestimmungseinrichtung dazu konfiguriert ist, einen Suchbaum oder einen binären Suchbaum zu verwenden, um den Abschnitt der Sekundärcodesequenz schrittweise zu erfassen.

6. Die Pseudoentfernungsbestimmungseinrichtung (100; 610) gemäß Anspruch 5, wobei die Pseudoentfernungsbestimmungseinrichtung dazu konfiguriert ist, einen Zweig des Suchbaums oder des binären Suchbaums ansprechend auf ein Ergebnis einer Korrelation eines Abschnitts eines empfangenen Signals, der zumindest zwei Symbole aufweist, mit zumindest zwei Referenzsequenzen(420,422) auszuwählen.

7. Die Pseudoentfernungsbestimmungseinrichtung (100; 610) gemäß einem der Ansprüche 1 bis 6, wobei die Pseudoentfernungsbestimmungseinrichtung dazu konfiguriert ist, ein Wissen über die Sekundärcodesequenz schrittweise zu vergrößern, bis festgestellt wird, dass ein Wissen über die Sekundärcodesequenz ausreichend ist, um eine Position des erfassten Abschnitts der Sekundärcodesequenz innerhalb eines vollständigen Zeitraums einer sich wiederholenden Sekundärcodesequenz eindeutig zu bestimmen.

8. Die Pseudoentfernungsbestimmungseinrichtung (100; 610) gemäß Anspruch 7, wobei die Pseudoentfernungsbestimmungseinrichtung dazu konfiguriert ist, auf der Basis einer Auswertung eines Suchbaums oder eines binären Suchbaums zu entscheiden, wie viele Symbole ausgewertet werden sollten, um ausreichendes Wissen über die Sekundärcodesequenz zu erlangen, das ausreichend ist, um eine Position des erfassten Abschnitts der Sekundärcodesequenz innerhalb eines vollständigen Zeitraums einer sich wiederholenden Sekundärcodesequenz eindeutig zu bestimmen.

9. Die Pseudoentfernungsbestimmungseinrichtung (100; 610) gemäß einem der Ansprüche 1 bis 8,
bei der das modulierte Signal ein Pilotsignal eines satellitenbasierten globalen Navigationssystems ist;
bei der die Primärcodesequenz ein Spreizcode des satellitenbasierten globalen Navigationssystems ist; und
bei der die Sekundärcodesequenz ein Overlay-Code des satellitenbasierten globalen Navigationssystems ist.

10. Die Pseudoentfernungsbestimmungseinrichtung (100; 610) gemäß einem der Ansprüche 1 bis 9, bei der die zweite Referenzsequenz (422) zumindest zwei nachfolgende Symbole darstellt, die entgegengesetzte Phasen aufweisen.

11. Die Pseudoentfernungsbestimmungseinrichtung (100; 610) gemäß einem der Ansprüche 1 bis 10, wobei die Pseudoentfernungsbestimmungseinrichtung dazu konfiguriert ist, ein Vorabwissen der Primär- und der Sekundärcodesequenz zu verwenden, um die Pseudoentfernungsinformationen bereitzustellen.

12. Ein Verfahren (200) zum Bereitstellen von Pseudoentfernungsinformationen, die eine Schätzung eines Abstands zwischen einem Sender und einem Empfänger auf der Basis eines modulierten Signals darstellen, das eine Sequenz von Symbolen aufweist, wobei eine Primärcodesequenz gemäß einer Sekundärcodesequenz moduliert wird, wobei das Verfahren folgende Schritte aufweist:
schrittweises Korrelieren (210) eines Abschnitts eines empfangenen Signals, der zumindest zwei Modulationssymbole der Sekundärcodesequenz aufweist, mit zumindest zwei Referenzsequenzen (420,422; 430,432; 434,436; 440,441; 442,443; 444,445; 446,447 oder 530,532,534,536,538,540,542,544; 550,552; 554,556, 558,560; 562,564), wobei eine erste Referenzsequenz zumindest zwei nachfolgende Symbole der Sekundärcodesequenz, die dieselben Phasen aufweisen, darstellt, und eine zweite Referenzsequenz zumindest zwei nachfolgende Symbole der Sekundärcodesequenz darstellt, die unterschiedliche Phasen aufweisen, darstellt, um
schrittweises Erfassen eines Abschnitts der Sekundärcodesequenz in Abhängigkeit von einem Ergebnis der Korrelationen; und
Bereitstellen (220) der Pseudoentfernungsinformationen auf der Basis einer Erfassung eines ausreichenden Abschnitts der Sekundärcodesequenz;
wobei das Verfahren ein Bestimmen, in einem ersten Schritt, dessen aufweist, welche Referenzsequenz der zumindest zwei Referenzsequenzen (420,422) einem ersten Abschnitt des empfangenen Signals, der zumindest zwei Modulationssymbole der Sekundärcodesequenz aufweist, am ähnlichsten ist; und
wobei das Verfahren ein Bestimmen, in einem zweiten Schritt, dessen aufweist, welche Referenzsequenz von zumindest zwei Referenzsequenzen (430,432; 434,436) eines zweiten Satzes von Referenzsequenzen einem zweiten Abschnitt des empfangenen Signals, der zumindest zwei Modulationssymbole der Sekundärcodesequenz aufweist, am ähnlichsten ist,
wobei sich der zweite Abschnitt des empfangenen Signals mit dem ersten Abschnitt des empfangenen Signals überlappt und die Referenzsequenzen des zweiten Satzes von Referenzsequenzen mit einem oder mehreren Symbolen beginnen, die an dem Ende des ersten Abschnitts des empfangenen Signals in dem ersten Schritt erkannt werden;
wobei unterschiedliche Abschnitte des empfangenen Signals mit zumindest zwei jeweiligen Referenzsequenzen derart korreliert werden, dass mit jedem Korrelationsschritt ein oder mehrere Modulationssymbole der Sekundärcodesequenz erkannt werden und
dass mehr und mehr Modulationssymbole der Sekundärcodesequenz in dem empfangenen modulierten Signal erkannt werden.

13. Ein Computerprogramm, das dazu angepasst ist, das Verfahren gemäß Anspruch 12 auszuführen, wenn das Computerprogramm auf einem Computer läuft.

## Revendications

1. Déterminateur de pseudo-distance (100; 610) destiné à fournir une information de pseudo-distance (112) représentant une estimation d'une distance entre un émetteur et un récepteur sur base d'un signal modulé (110) comprenant une séquence de symboles, dans lequel une séquence de codes primaires est modulée selon une séquence de codes secondaires, dans lequel le déterminateur de pseudo-distance est configuré pour
corréler pas à pas une partie d'un signal reçu comprenant au moins deux symboles de modulation de la séquence de codes secondaires avec au moins deux séquences de référence (420, 422; 430, 432; 434, 436; 440, 441; 442, 443; 444, 445; 446, 447 ou 530, 532, 534, 536, 538, 540, 542, 544; 550, 552; 554, 556, 558, 560; 562, 564), une première séquence de référence représentant au moins deux symboles successifs de la séquence de codes secondaires présentant les mêmes phases et une deuxième séquence de référence représentant au moins deux symboles successifs de la séquence de codes secondaires présentant des phases différentes, pour
acquérir pas à pas, en fonction d'un résultat des corrélations, une partie de la séquence de codes secondaires; et
dans lequel le déterminateur de pseudo-distance est configuré pour fournir les informations de pseudo-distance sur base d'une acquisition d'une partie suffisante de la séquence de codes secondaires;
dans lequel le déterminateur de pseudo-distance est configuré pour déterminer, dans une première étape, la séquence de référence parmi les au moins deux séquences de référence (420, 422) qui est la plus similaire à une première partie du signal reçu comprenant au moins deux symboles de modulation de la séquence de codes secondaires; et
dans lequel le déterminateur de pseudo-distance est configuré pour déterminer, dans une deuxième étape, la séquence de référence parmi au moins deux séquences de référence (430, 432; 434, 436) d'un deuxième ensemble de séquences de référence qui est la plus similaire à une deuxième partie du signal reçu comprenant au moins deux symboles de modulation de la séquence de codes secondaires,
dans lequel la deuxième partie du signal reçu vient en recouvrement avec la première partie du signal reçu et les séquences de référence du deuxième ensemble de séquences de référence commencent par un ou plusieurs symboles reconnus à la fin de la première partie du signal reçu dans la première étape;
dans lequel le déterminateur de pseudo-distance est configuré pour corréler différentes parties du signal reçu avec au moins deux séquences de référence respectives, de sorte qu'un ou plusieurs symboles de modulation de la séquence de codes secondaires soient reconnus à chaque étape de corrélation, et de sorte que de plus en plus de symboles de modulation de la séquence de codes secondaires soient reconnus dans le signal modulé reçu.

2. Déterminateur de pseudo-distance (100; 610) selon la revendication 1, dans lequel le déterminateur de pseudo-distance est configuré pour choisir le deuxième ensemble de séquences de référence (430, 432; 434, 436) en fonction d'un résultat de la détermination effectuée à la première étape.

3. Déterminateur de pseudo-distance (100; 610) selon la revendication 1 ou la revendication 2, dans lequel le déterminateur de pseudo-distance est configuré pour déterminer, dans une ou plusieurs étapes additionnelles, la séquence de référence parmi au moins deux séquences de référence (440, 441; 442, 443; 444, 445; 446, 447) d'un ou plusieurs ensembles additionnels de séquences de référence qui est la plus similaire à une partie respective du signal reçu comprenant au moins deux symboles,
dans lequel une partie actuellement traitée respective du signal reçu vient en recouvrement avec une partie traitée auparavant respective du signal reçu.

4. Déterminateur de pseudo-distance (100; 610) selon l'une des revendications 1 à 3, dans lequel le déterminateur de pseudo-distance est configuré pour augmenter pas à pas la connaissance de la séquence de codes secondaires,
dans lequel le déterminateur de pseudo-distance est configuré pour utiliser la connaissance acquise auparavant sur la séquence de codes secondaires pour augmenter une connaissance sur la séquence de codes secondaires.

5. Déterminateur de pseudo-distance (100; 610) selon l'une des revendications 1 à 4, dans lequel le déterminateur de pseudo-distance est configuré pour utiliser un arbre de recherche ou un arbre de recherche binaire pour acquérir pas à pas la partie de la séquence de codes secondaires.

6. Déterminateur de pseudo-distance (100; 610) selon la revendication 5, dans lequel le déterminateur de pseudo-distance est configuré pour sélectionner une branche de l'arbre de recherche ou de l'arbre de recherche binaire en réaction à un résultat d'une corrélation d'une partie d'un signal reçu comprenant au moins deux symboles avec au moins deux séquences de référence (420, 422).

7. Déterminateur de pseudo-distance (100; 610) selon l'une des revendications 1 à 6, dans lequel le déterminateur de pseudo-distance est configuré pour augmenter pas à pas une connaissance de la séquence de codes secondaires jusqu'à ce qu'il soit constaté qu'une connaissance de la séquence de codes secondaires est suffisante pour déterminer de manière unique une position de la partie acquise de la séquence de codes secondaires dans une période complète d'une séquence de codes secondaires répétitive.

8. Déterminateur de pseudo-distance (100; 610) selon la revendication 7, dans lequel le déterminateur de pseudo-distance est configuré pour décider, sur base d'une évaluation d'un arbre de recherche ou d'un arbre de recherche binaire, la quantité de symboles qui doivent être évalués pour obtenir une connaissance suffisante de la séquence de codes secondaires, suffisante pour déterminer de manière unique une position de la partie acquise de la séquence de codes secondaires dans une période complète d'une séquence de codes secondaires répétitive.

9. Déterminateur de pseudo-distance (100; 610) selon l'une des revendications 1 à 8,
dans lequel le signal modulé est un signal pilote d'un système mondial de navigation par satellite;
dans lequel la séquence de codes primaires est un code d'étalement du système mondial de navigation par satellite; et dans lequel la séquence de codes secondaires est un code de superposition du système mondial de navigation par satellite.

10. Déterminateur de pseudo-distance (100; 610) selon l'une des revendications 1 à 9, dans lequel la deuxième séquence de référence (422) représente au moins deux symboles successifs présentant des phases opposées.

11. Déterminateur de pseudo-distance (100; 610) selon l'une des revendications 1 à 10, dans lequel le déterminateur de pseudo-distance est configuré pour utiliser une connaissance à priori de la séquence de codes primaires et secondaires pour fournir les informations de pseudo-distance.

12. Procédé (200) permettant de fournir une information de pseudo-distance représentant une estimation d'une distance entre un émetteur et un récepteur sur base d'un signal modulé comprenant une séquence de symboles, où une séquence de codes primaires est modulée selon une séquence de codes secondaires, le procédé comprenant le fait de:
corréler pas à pas (210) une partie d'un signal reçu comprenant au moins deux symboles de modulation de la séquence de codes secondaires avec au moins deux séquences de référence (420, 422; 430, 432; 434, 436; 440, 441; 442, 443; 444, 445; 446, 447 ou 530, 532, 534, 536, 538, 540, 542, 544; 550, 552; 554, 556, 558, 560; 562, 564), une première séquence de référence représentant au moins deux symboles successifs de la séquence de codes secondaires présentant les mêmes phases et une deuxième séquence de référence représentant au moins deux symboles successifs de la séquence de codes secondaires présentant des phases différentes, pour
acquérir pas à pas, en fonction d'un résultat des corrélations, une partie de la séquence de codes secondaires; et
fournir (220) les informations de pseudo-distance sur base d'une acquisition d'une partie suffisante de la séquence de codes secondaires;
dans lequel le procédé comprend le fait de déterminer, dans une première étape, la séquence de référence parmi les au moins deux séquences de référence (420, 422) qui est la plus similaire à une première partie du signal reçu comprenant au moins deux symboles de modulation de la séquence de codes secondaires; et
dans lequel le procédé comprend le fait de déterminer, dans une deuxième étape, la séquence de référence parmi au moins deux séquences de référence (430, 432; 434, 436) d'un deuxième ensemble de séquences de référence qui est la plus similaire à une deuxième partie du signal reçu comprenant au moins deux symboles de modulation de la séquence de codes secondaires,
dans lequel la deuxième partie du signal reçu vient en recouvrement avec la première partie du signal reçu et les séquences de référence du deuxième ensemble de séquences de référence commencent par un ou plusieurs symboles reconnus à la fin de la première partie du signal reçu dans la première étape;
dans lequel différentes parties du signal reçu sont corrélées avec au moins deux séquences de référence respectives, de sorte qu'un ou plusieurs symboles de modulation de la séquence de codes secondaires soient reconnus à chaque étape de corrélation, et de sorte que de plus en plus de symboles de modulation de la séquence de codes secondaires soient reconnus dans le signal modulé reçu.

13. Programme d'ordinateur adapté pour réaliser le procédé selon la revendication 12 lorsque le programme d'ordinateur est exécuté sur un ordinateur.
